# EUROPÄISCHE PATENTSCHRIFT

(11) **EP 4 313 652 B1**
(45) Veröffentlichungstag und Bekanntmachung des Hinweises auf die Patenterteilung: **09.10.2024**
(21) Anmeldenummer: 22714980.4
(22) Anmeldetag: 30.03.2022
(51) Int. Cl.: B60K 15/03, B60K 15/063, B60K 15/067, B60K 15/07, B60K 15/073, B60K 1/00

(54) **FAHRZEUG MIT KRYOBEHÄLTER UND EFFIZIENTER FÜHRUNG DER ANSCHLUSSLEITUNG**
VEHICLE WITH CRYOGENIC CONTAINER AND EFFICIENT ROUTING OF THE CONNECTION LINE
VÉHICULE AVEC CONTENEUR CRYOGÉNIQUE ET ROUTAGE EFFICACE DE LA LIGNE DE CONNEXION

(30) Priorität: 01.04.2021 AT 5006121 U
(43) Veröffentlichungstag der Anmeldung: 07.02.2024
(73) Patentinhaber: Cryoshelter LH2 GmbH, 8143 Dobl-Zwaring (AT); Cryoshelter BioLNG GmbH, 8143 Dobl-Zwaring (AT)
(72) Erfinder: REBERNIK, Matthias, 8143 Dobl-Zwaring (AT)
(74) Vertreter: Schwarz & Partner Patentanwälte GmbH
(86) Internationale Anmeldenummer: PCT/AT2022/060096
(87) Internationale Veröffentlichungsnummer: WO 2022/204743

(56) Entgegenhaltungen:
- CN-A- 105 438 262
- CN-A- 110 126 919
- CN-Y- 2 647 706
- US-A1- 2014 069 972
- US-A1- 2018 257 580
- US-B1- 10 589 788
- US-B1- 9 751 399

## Beschreibung

Die Erfindung betrifft ein Fahrzeug, umfassend einen Fahrzeugrahmen mit einer Rahmenoberkante, eine Vorderachse mit zumindest einem Vorderrad, eine Hinterachse mit zumindest einem Hinterrad und einen seitlich des Fahrzeugrahmens angeordneten Kryobehälter, wobei der Kryobehälter in einem Bauraum angeordnet ist.

Gemäß dem Stand der Technik können verflüssigte Gase in Behältern ("Kryobehältern") gespeichert werden, um diese als Kraftstoff für beispielsweise einen Verbraucher wie einen Motor oder einer Brennstoffzelle zu lagern. Verflüssigte Gase sind Gase, die bei Siedetemperatur im flüssigen Aggregatzustand vorliegen, wobei die Siedetemperatur dieses Fluids druckabhängig ist. Wird eine solche kryogene Flüssigkeit in einen Kryobehälter gefüllt, so stellt sich, abgesehen von thermischen Wechselspielen mit dem Kryobehälter selbst, ein Druck entsprechend der Siedetemperatur ein.

Werden die Kryobehälter als Kraftstoffbehälter für Fahrzeuge, insbesondere Sattelzugmaschinen, eingesetzt, werden diese üblicherweise seitlich am Fahrzeugrahmen zwischen dem Hinterrad und dem Vorderrad am Fahrzeug montiert. Die obere Bauraumhöhe ist durch die Oberkante des Fahrzeugrahmens begrenzt, denn oberhalb des Fahrzeugrahmens kommt ein Sattelauflieger zu liegen, der den Kryobehälter beschädigen würde, wenn der Kryobehälter oberhalb der Rahmenoberkante liegen würde.

Die tiefstmögliche Stelle des Kryobehälters liegt an der sogenannten Mindestbodenfreiheitshöhe, welche üblicherweise mit dem tiefsten Punkt der restlichen Fahrzeugkomponenten übereinstimmt. Die Mindestbodenfreiheitshöhe definiert einen Sicherheitsabstand zur Straße, um Kollisionen des Kryobehälters bzw. der Fahrzeugkomponenten mit unebenen Straßenabschnitten oder Objekten auf der Straße zu vermeiden.

Diese vorgenannten Erwägungen definieren somit einen maximalen Bauraum, in dem sich der Kryobehälter befinden kann. Aus dem Stand der Technik ist überdies bekannt, auch die Anschlussleitungen an den Kryobehälter und dessen Betriebskomponenten in diesem Bauraum vorzusehen. Es versteht sich jedoch, dass die Anschlussleitungen an den Kryobehälter, insbesondere die Entnahmeleitung, ausgehend vom Kryobehälter an irgendeiner Stelle aus dem Bauraum in das Fahrzeug geführt werden müssen, beispielsweise um die Entnahmeleitung zum Verbraucher zu führen. Zu diesem Zweck werden die Anschlussleitungen gemäß dem Stand der Technik durch die dem Fahrzeugrahmen zugewandte Seite des zur Verfügung stehenden Bauraumes geführt und von dort, beispielsweise entlang des Fahrzeugrahmens, zum Verbraucher des Fahrzeugs geführt.

Die EP 3 121 505 B1 beschreibt ein derartiges System, bei dem ein Kryobehälter seitlich an einem Fahrzeug an dessen Fahrzeugrahmen montiert ist. Um zu vermeiden, dass der Kryobehälter kleiner ausgestaltet werden muss, um auch die Anschlussleitungen im zur Verfügung stehenden Bauraum vorzusehen, wie dies beispielsweise für die Ausführungsform der Figuren 6a und 6b dieser Schrift der Fall sein müsste, können die Anschlussleitungen seitlich durch einen Zwickel geführt werden, der sich durch die Krümmung der Endkappe ergibt, wie dies insbesondere in Figur 4 der EP 3 121 505 B1 gezeigt ist. Durch die gekrümmte Endkappe müssen die Anschlussleitungen den zur Verfügung stehenden Bauraum nicht verlassen, bevor die Anschlussleitungen zum Fahrzeugrahmen geführt werden. Dadurch kann der zur Verfügung stehende Bauraum sowohl für den Kryobehälter als auch für dessen Anschlussleitungen besonders gut ausgenutzt werden.

Das Problem, dass auch die Anschlussleitungen sicher und platzsparend im zur Verfügung stehenden Bauraum geführt werden sollen, schien durch die Führung der Anschlussleitungen durch den Rundungsbereich der Endkappen gelöst zu sein. Neueste Entwicklungen im Bereich der Kryobehältertechnik sehen jedoch vor, dass die Kryobehälter anstelle einer gekrümmten Endkappe auch eine plane Endkappe aufweisen könnten. Im Bereich der Endkappen können diese neuen Kryobehälter damit den zur Verfügung stehenden Bauraum besser ausnutzen und das Volumen des Kryobehälters kann vergrößert werden. Damit ist jedoch wieder das ursprüngliche Problem vorhanden, dass die Anschlussleitungen seitlich oder oberhalb des Kryobehälters geführt werden müssten, aber innerhalb des zur Verfügung stehenden Bauraumes, sodass der Kryobehälter entweder kürzer oder mit einem geringeren Durchmesser ausgestaltet werden müsste, um im zur Verfügung stehenden Bauraum Platz für die Anschlussleitungen zu lassen.

Weiters zeigen auch die Dokumente US 10 589 788 B1, CN 2 647 706 Y, US 2014/069972 A1 und CN 110 126 919 A Fahrzeuge mit einem Fahrzeugrahmen, wobei am Fahrzeugrahmen ein Kraftstoffbehälter zwischen Vorderrad und Hinterrad angeordnet ist. Auch bei diesen Ausführungsvarianten kommt es zu den genannten Problemen bei der Leitungsführung.

Es ist daher die Aufgabe der Erfindung, ein System zu schaffen, bei dem der Kryobehälter bei geeigneter Führung der Anschlussleitungen möglichst groß ausgeführt werden kann.

Diese Aufgabe wird gelöst durch ein Fahrzeug, umfassend einen Fahrzeugrahmen mit einer Rahmenoberkante, eine Vorderachse mit zumindest einem Vorderrad, eine Hinterachse mit zumindest einem Hinterrad und einen seitlich des Fahrzeugrahmens angeordneten Kryobehälter, wobei der Kryobehälter in einem Bauraum angeordnet ist, der durch die folgenden Ebenen eingeschlossen ist:
- vorne durch eine am Vorderrad oder gegebenenfalls an einem ersten Schmutzfänger des Vorderrads anliegende, dem Hinterrad zugewandte vertikale Vorderebene und
- hinten durch eine am Hinterrad oder gegebenenfalls an einem zweiten Schmutzfänger des Hinterrads anliegende, dem Vorderrad zugewandte vertikale Hinterebene,
- auf der dem Fahrzeugrahmen zugewandten Seite durch eine durch die Rahmenoberkante verlaufende vertikale Rahmenebene,
- auf der dem Fahrzeugrahmen abgewandten Seite durch eine sich in einem vorbestimmten Abstand zum Fahrzeugrahmen befindliche vertikale Außenebene,
- oben durch eine durch die Rahmenoberkante verlaufende horizontale Oberebene,
- unten durch eine auf einer Mindestbodenfreiheitshöhe liegenden horizontalen Unterebene,
wobei zumindest eine Anschlussleitung, welche an den Kryobehälter oder an eine sich im Bauraum befindliche Betriebskomponente des Kryobehälters angeschlossen ist, oder eine Betriebskomponente, welche Teil eines Betankungsystems, Entnahmesystems oder Ventsystems des Kryobehälters ist, durch einen der folgenden Zwickel außerhalb des zur Verfügung stehenden Bauraumes verläuft:
- durch einen Hinterradzwickel, der begrenzt ist von der Oberebene, der Unterebene, der Rahmenebene, der Außenebene, der Hinterebene und einem ersten Abzugsvolumen, welches durch das Hinterrad oder den zweiten Schmutzfänger gebildet ist und frei von Anschlussleitungen bleibt,
- durch einen Vorderradzwickel, der von der Oberebene, der Unterebene, der Rahmenebene, der Außenebene, der Vorderebene und einem zweiten Abzugsvolumen begrenzt ist, welches durch das Vorderrad oder den ersten Schmutzfänger gebildet ist und frei von Anschlussleitungen bleibt,
- durch einen Unterbauzwickel, der begrenzt ist von der Rahmenebene, der Außenebene, der Vorderebene, der Hinterebene, der Unterebene und einem dritten Abzugsvolumen, welches durch ein extrudiertes Dreieck gebildet wird, dessen erste Extrusionskante durch den untersten Punkt des Vorderrades verläuft, dessen zweite Extrusionskante durch den untersten Punkt des Hinterrades verläuft und dessen dritte Extrusionskante äquidistant zwischen Hinterrad und Vorderrad durch die Unterebene verläuft, wobei das dritte Abzugsvolumen frei von Anschlussleitungen bleibt, oder
- durch einen Sattelaufliegerzwickel, der begrenzt ist von der Rahmenebene, der Außenebene, der Vorderebene, der Hinterebene, der Oberebene und einem vierten Abzugsvolumen, welches durch einen Schwenkbereich eines am Fahrzeug montierten Sattelaufliegers gebildet wird, wobei das vierte Abzugsvolumen frei von Anschlussleitungen bleibt.

Erfindungsgemäß wird somit vorgesehen, die Anschlussleitung nicht bzw. nicht nur durch jenen Bauraum zu führen, der für den Kryobehälter zur Verfügung steht, sondern durch jene kleinen Bereiche außerhalb des zur Verfügung stehenden Bauraumes, an denen keine bzw. nur geringe Sicherheitsbedenken bestehen. Diese Bereiche sind erfindungsgemäß der Hinterradzwickel, der Vorderradzwickel, der Unterbauzwickel und der Sattelaufliegerzwickel.

Dem Hinterradzwickel und dem Vorderradzwickel liegen die Erkenntnis zugrunde, dass ein durch die Rundung des Rades vorhandener Raum ausgenutzt werden kann, der zwar dem Kryobehälter nicht zugänglich ist, der Anschlussleitung jedoch schon. Der Unterbauzwickel kann durch die erfinderische Idee ausgenutzt werden, dass unterhalb der Mindestbodenfreiheitsebene unmittelbar neben den Rädern keine bzw. nur eine äußerst geringe Kollisionsgefahr mit einer unebenen Straße besteht. Der unebene Straßenverlauf kann durch das extrudierte Dreieck (ein gleichschenkeliges Dreieck mit Extrusionsrichtung normal zur Fahrtrichtung) definiert werden. Der Sattelaufliegerzwickel beruht auf der Erkenntnis, dass der Sattelauflieger nicht an allen Stellen mit darunter liegenden Objekten kollidieren kann.

Durch die erfindungsgemäße Lösung kann der zur Verfügung stehende Bauraum für andere Komponenten als die Anschlussleitung ausgenutzt werden, sodass beispielsweise das Volumen des Kryobehälters maximiert werden und dieser gleichzeitig plane Endkappen aufweisen kann. Alternativ könnte beispielsweise das Volumen des Kryobehälters nicht maximiert werden aber der zusätzlich gewonnene Raum für Betriebskomponenten wie einen Wärmetauscher ausgenutzt werden.

Es versteht sich, dass auch mehrere Anschlussleitungen zum Fahrzeug geführt werden können, wobei alle Anschlussleitungen nur durch einen der genannten Zwickel oder durch unterschiedliche der genannten Zwickel geführt werden.

Insbesondere bringen die genannten Zwickel den Vorteil, dass eine Anschlussleitung durch die Zwickel außerhalb des zur Verfügung stehenden Bauraums geführt sein können, wobei sich der Kryobehälter und/oder eine Betriebskomponente im Bereich dieser Zwickel am äußeren Rand des zur Verfügung stehenden Bauraumes befinden können. In anderen Worten kann sich in einem Bereich zwischen der Austrittsstelle der Anschlussleitung aus dem Fahrzeugrahmen und der Eintrittsstelle der Anschlussleitung in den zur Verfügung stehenden Bauraum der Kryobehälter oder eine Betriebskomponente an einer der Außenseiten des zur Verfügung stehenden Bauraumes befinden. Alternativ könnte eine aus dem Bauraum geführte Anschlussleitung durch den Zwickel geführt werden und an einer anderen Stelle wieder in den Bauraum eintreten, sodass dieser gewonnene Bereich im Bauraum durch den Kryobehälter oder eine Betriebskomponente ausgenutzt werden kann.

Anspruchsgemäß ist die genannte Anschlussleitung durch einen der erfindungsgemäßen Zwickel geführt und an den Kryobehälter angeschlossen. Beispielsweise steht die Anschlussleitung in Fluidverbindung mit dem Kryobehälter, wobei in der Anschlussleitung auch Zwischenkomponenten wie der unten erläuterte Wärmetauscher zwischengeschalten sein können. Die Anschlussleitung muss jedoch nicht in Fluidverbindung mit dem Kryobehälter stehen, sondern kann an eine sich im Bauraum befindliche Betriebskomponente des Kryobehälters angeschlossen sein, die üblicherweise Teil des Betankungsystems, Entnahmesystems oder Ventsystems des Kryobehälters ist. Dies ist z.B. der Fall, wenn es sich bei der Anschlussleitung um eine Leitung zum Zuführen von Wärmetauschmedium an einen Wärmetauscher handelt, welcher selbst eine Betriebskomponente des Entnahmesystems des Kryobehälters ist. Bevorzugt ist jedenfalls, wenn die Anschlussleitung fluiddurchströmbar ist.

Erfindungsgemäß hat sich jedoch herausgestellt, dass nicht nur eine Führung einer Anschlussleitung durch einen der genannten Zwickel vorteilhaft ist, sondern auch eine Anordnung einer Betriebskomponente in einem der Zwickel, da dadurch die Betriebskomponenten vergrößert werden können oder die Betriebskomponenten (zumindest teilweise) außerhalb des zur Verfügung stehenden Bauraumes angeordnet werden können, wodurch der Platz im zur Verfügung stehenden Bauraum durch andere Komponenten verwendet werden kann. In einigen der erfindungsgemäßen Ausführungsformen kann sich somit auch eine Betriebskomponente, besonders bevorzugt der Wärmetauscher, ein Ventilmodul, ein Überdruckventil oder eine Befüllkupplung, zumindest teilweise oder vollständig im Hinterradzwickel, Vorderradzwickel, Unterbauzwickel oder Sattelaufliegerzwickel befinden.

Besonders bevorzugt ist die Anschlussleitung ausgehend vom Fahrzeugrahmen durch den Hinterradzwickel oder Vorderzwickel geführt und ist in einen oberen, dem Fahrzeugrahmen abgewandten Quadranten des zur Verfügung stehenden Bauraumes geführt. Dadurch kann die Anschlussleitung in geeigneter Weise an eine Stelle des Kryobehälters geführt werden, die besonders leicht zugänglich ist, ohne dabei den zur Verfügung stehenden Bauraum quer zur Fahrtrichtung des Fahrzeugs durchschreiten zu müssen.

In der vorgenannten Ausführungsform kann das Fahrzeug insbesondere eine Radzwickelabdeckung umfassen, welche die Anschlussleitung und/oder Betriebskomponente im Hinterradzwickel oder Vorderzwickel zumindest teilweise umschließt, wobei die Radzwickelabdeckung optional auf der dem Fahrzeugrahmen abgewandten Seite in den oberen, dem Fahrzeugrahmen abgewandten Quadranten des Bauraumes geführt ist und dort die Anschlussleitung und bevorzugt auch eine Betriebskomponente umschließt. Diese Radzwickelabdeckung kann bevorzugt im Hinterradzwickel oder Vorderzwickel, besonders bevorzugt eine Schnittstelle für einen Anschluss an die Anschlussleitung aufweisen beispielsweise im Wesentlichen an der Rahmenebene. Die Abdeckung schafft insbesondere in Kombination mit den Schnittstellen eine Möglichkeit, um den Kryobehälter zusammen mit seinen Betriebskomponenten bzw. der darauf befindlichen Leitungsführung modular auszugestalten.

Analog zu den genannten Ausführungsformen kann die Anschlussleitung auch durch den Unterbauzwickel bzw. Sattelaufliegerzwickel zu einem Quadranten des Bauraumes geführt werden, der dem Fahrzeugrahmen abgewandt ist.

Hierfür ist die Anschlussleitung beispielsweise ausgehend vom Fahrzeugrahmen unterhalb des zur Verfügung stehenden Bauraumes durch den Unterraumzwickel geführt und in einen unteren, dem Fahrzeugrahmen abgewandten Quadranten des zur Verfügung stehenden Bauraumes geführt. Alternativ oder zusätzlich ist die Anschlussleitung ausgehend vom Fahrzeugrahmen oberhalb des zur Verfügung stehenden Bauraumes durch den Sattelaufliegerzwickel geführt und in einen oberen, dem Fahrzeugrahmen abgewandten Quadranten des zur Verfügung stehenden Bauraumes geführt.

Auch in diesen Ausführungsformen kann eine Abdeckung mit Schnittstellen vorgesehen werden, wobei das Fahrzeug beispielsweise eine Unterbauzwickelabdeckung umfasst, welche die Anschlussleitung und/oder Betriebskomponente im Unterbauzwickel zumindest teilweise umschließt, wobei die Unterbauzwickelabdeckung optional auf der dem Fahrzeugrahmen abgewandten Seite in den unteren, dem Fahrzeugrahmen abgewandten Quadranten des Bauraumes geführt ist und dort die Anschlussleitung und bevorzugt auch eine Betriebskomponente umschließt, wobei die Unterbauzwickelabdeckung bevorzugt eine Schnittstelle für einen Anschluss an die Anschlussleitung aufweist, wobei die Schnittstelle beispielsweise im Unterbauzwickel angeordnet ist.

Im Falle der Führung der Anschlussleitung durch den Sattelaufliegerzwickel kann das Fahrzeug eine Sattelaufliegerzwickelabdeckung umfassen, welche die Anschlussleitung und/oder Betriebskomponente im Sattelaufliegerzwickel zumindest teilweise umschließt, wobei die Sattelaufliegerzwickelabdeckung optional auf der dem Fahrzeugrahmen abgewandten Seite in den oberen, dem Fahrzeugrahmen abgewandten Quadranten des Bauraumes geführt ist und dort die Anschlussleitung an den Kryobehälter und bevorzugt auch eine Betriebskomponente umschließt, wobei die Sattelaufliegerzwickelabdeckung bevorzugt eine Schnittstelle für einen Anschluss an die Anschlussleitung aufweist, wobei die Schnittstelle beispielsweise im Sattelaufliegerzwickel angeordnet ist.

Damit die Betriebskomponenten nicht alle über die Länge des Kryobehälters verteilt angeordnet sein müssen, kann vorgesehen werden, dass die Anschlussleitung oder eine Verbindungsleitung vom oberen, dem Fahrzeugrahmen abgewandten Quadranten des Bauraumes in einen unteren, dem Fahrzeugrahmen abgewandten Quadranten des Bauraumes geführt ist. Bevorzugt liegt die Verbindungsleitung vollständig innerhalb des zur Verfügung stehenden Bauraumes, was bei einem Kryobehälter mit maximalem Durchmesser möglich ist, wenn der Abstand zwischen Rahmenebene und Außenebene größer ist als zwischen Oberebene und Unterebene, d.h. der Durchmesser des Kryobehälters bzw. seiner Mantelfläche entspricht dem Abstand zwischen Oberebene und Unterebene. Diese Ausführungsform ist insbesondere im Zusammenhang mit den untengenannten Spannbändern vorteilhaft, da diese Ausführungsform eine Leitungsführung bzw. Anordnung der Betriebskomponenten um den Umfang der Mantelfläche ermöglicht.

In der vorgenannten Ausführungsform kann in Verbindung mit den oben erläuterten Abdeckungen vorgesehen werden, dass die jeweilige Abdeckung die Anschlussleitung und/oder die Verbindungsleitung sowohl im oberen, dem Fahrzeugrahmen abgewandten Quadranten des Bauraumes als auch im unteren, dem Fahrzeugrahmen abgewandten Quadranten des Bauraumes umschließt. Dadurch muss nur eine einzige Abdeckung vorgesehen werden.

Wie oben erläutert ermöglicht die Erfindung vor allem eine bestmögliche Ausnutzung für Kryobehälter mit ebenen Endkappen. Aus dem Stand der Technik sind jedoch auch andere Endkappen bekannt, beispielsweise gekrümmte Endkappen, die Anschlussstutzen aufweisen, die endseitig aus der Endkappe stehen und dadurch die Länge des Kryobehälters vergrößern.

Erfindungsgemäß kann bei diesen Endkappen zur besseren Ausnutzung des zur Verfügung stehenden Bauraumes vorgesehen werden, dass die Anschlussleitung einen an einer der Endkappen des Kryobehälters angebauten, bevorzugt außermittig angebauten, Anschlussstutzen umfasst, welcher in den Hinterradzwickel oder Vorderradzwickel hineinragt. Der Kryobehälter kann dadurch näher an der Vorderebene bzw. der Hinterebene angeordnet werden, da der Anschlussstutzen nicht mehr vollständig im zur Verfügung stehenden Bauraum angeordnet sein muss.

In einer besonders bevorzugten Ausführungsform umfasst das Fahrzeug zumindest zwei Spannbänder, welche den Kryobehälter umgreifen und im zur Verfügung stehenden Bauraum am Fahrzeugrahmen fixieren, gegebenenfalls auf Tragkonsolen, auf denen der Kryobehälter aufliegt. In dieser Ausführungsform können sich die Anschlussleitung und die Betriebskomponente dank der Führung der Anschlussleitung durch die genannten Zwickel nur auf jener Seite eines äußersten Spannbandes befinden, die der nächstliegenden Endkappe zugewandt ist. Dies ermöglicht, dass die Anschlussleitungen die Spannbänder nicht überkreuzen bzw. unterschreiten müssen, was die Montage des Kryobehälters auf dem Fahrzeugrahmen besonders einfach macht.

Wie eingangs erläutert kann nicht nur eine Anschlussleitung im Hinterradzwickel, Vorderradzwickel, Unterbauzwickel und/oder Sattelaufliegerzwickel angeordnet sein, sondern auch eine Betriebskomponente. Diese kann sich teilweise oder vollständig in einem dieser Zwickel befinden.

Wenn die Betriebskomponente vollständig in einem dieser Zwickel angeordnet werden soll, ist bevorzugt, wenn die Betriebskomponente stabförmig ausgebildet und im Wesentlichen horizontal (gegebenenfalls um 0,1-10° geneigt, da dies insbesondere für Pumpen vorteilhaft sein kann) und normal zur Fahrtrichtung angeordnet ist. Dadurch kann der Platz im Zwickel besonders gut ausgenutzt werden. Auch wenn die Betriebskomponente nur teilweise in einem dieser Zwickel angeordnet werden soll, kann die Betriebskomponente stabförmig ausgebildet sein. Wenn die Betriebskomponente vom zur Verfügung stehenden Bauraum in den Hinterradzwickel oder Vorderradzwickel stehen soll, ist diese bevorzugt im Wesentlichen horizontal (gegebenenfalls um 0,1-10° geneigt) und parallel zur Fahrtrichtung angeordnet. Wenn die Betriebskomponente vom zur Verfügung stehenden Bauraum in den Unterbauzwickel oder Sattelaufliegerzwickel stehen soll, ist diese bevorzugt senkrecht angeordnet. Beispiele für stabförmige Betriebskomponenten, die relativ viel Platz einnehmen, sind insbesondere der Wärmetauscher, die Pumpe und ein Ventilmodul. Zusätzlich können Module wie z.B. Ventilmodule so gestaltet werden, den im jeweils verfügbaren Zwickel verfügbaren Platz möglichst gut auszufüllen, z.B. indem eine Seite des Ventilmoduls an die Form eines Schmutzfängers angepasst wird, um dieses unmittelbar und passend am Schmutzfänger zu montieren.

Die genannten Betriebskomponenten können ausgewählt sein aus der Liste: Wärmetauscher, Economizer, Überdruckventil, Rückschlagventil, Handventil, elektromechanisches Ventil, elektrischer Schalter hierfür, insbesondere Not-Aus Schalter, Ventilmodul umfassend zumindest zwei Ventile, Befüllstutzen, Entlüftungsanschluss, Entleerungsanschluss, Pumpe, Druckaufbaueinrichtung, Manometer und Steuergerät für zumindest eine der vorgenannten Betriebskomponenten. Der Wärmetauscher wird in der Regel benötigt, um entnommenes Kryofluid zu verdampfen und dadurch dessen Temperatur zu erhöhen, was im Allgemeinen notwendig ist, da der Verbraucher eine bestimmte Mindesttemperatur des Kryofluids benötigt. Der Wärmetauscher kann einen Eingang und einen Ausgang für Kryofluid und einen Eingang und einen Ausgang für Wärmetauschmedium aufweisen. Der Wärmetauscher kann hierbei drei Anschlussleitungen aufweisen, die durch die erfindungsgemäßen Zwickel geführt werden. Eine Anschlussleitung des Wärmetauschers wird unmittelbar in den Kryobehälter geführt. Unter einem Economizer wird eine Vorrichtung verstanden, die steuert, ob Kryofluid in Gasphase oder Flüssigphase aus dem Kryobehälter entnommen wird, um den Druck im Kryobehälter zu regulieren. Zumindest ein Überdruckventil, üblicherweise zwei Überdruckventile, werden vorgesehen, damit sichergestellt ist, dass das Kryofluid aus dem Kryobehälter entweichen kann, wenn der Druck im Kryobehälter einen Schwellwert überschreitet. Rückschlagventile werden beispielsweise vorgesehen, um einen Rückfluss von bereits entnommenem Kryofluid in den Kryobehälter zu verhindern. Handventile können beispielsweise vorgesehen werden, um eine weitere Entnahme von Kryofluid manuell zu stoppen. Über den Befüllstutzen (Befüllkupplung) wird Kryofluid in den Kryobehälter eingebracht. Über den Entlüftungsanschluss kann dem Kryobehälter Kryofluid in Gasphase entnommen werden, um den Druck im Kryobehälter manuell zu senken und die Gasphase gezielt abzuführen. Die Pumpe und/oder die Druckaufbaueinrichtung werden in der Regel als Teil eines Konditioniersystems eingesetzt, um den Zustand (Druck, Temperatur etc.) des Kryofluids im Kryobehälter zu regeln. Das Steuergerät kann vorgesehen werden, um Betriebskomponenten, insbesondere Ventile, des Entnahmesystems, Befüllsystems, Konditioniersystems und/oder Entlüftungssystems zu steuern. Besonders bevorzugt ist eine der Betriebskomponenten ein Wärmetauscher und eine andere ein Befüllstutzen (Befüllkupplung), die jeweils bevorzugt zumindest teilweise über der Mantelfläche des Kryobehälters liegen und über den Umfang der Mantelfläche verteilt sind. Besonders bevorzugt befinden sich die Betriebskomponenten jeweils vollständig in einem der vier genannten Quadranten. Alle diese Betriebskomponenten sind Teil des Entnahmesystems, Befüllsystems oder Ventsystems des Kryobehälters. Es versteht sich, dass übergeordnet und somit als Teil von mehreren dieser Systeme Sicherheitssysteme vorgesehen werden können, die sich aus dem Zusammenwirken des Entnahmesystems, Betankungssystems und/oder Ventsystems ergeben. Das Sicherheitssystem kann somit beispielsweise Sensoren zur Überwachung oder zur Erkennung eines Betriebszustandes (z.B. Betankung, Venten, ...) umfassen, die wiederum Teil des Entnahmesystems, Befüllsystems bzw. Ventsystems sind.

Besonders bevorzugt sind zumindest ein Wärmetauscher und zumindest ein Befüllstutzen im zur Verfügung stehenden Bauraum angeordnet, bevorzugt in unterschiedlichen Quadranten des zur Verfügung stehenden Bauraumes, beispielsweise vollständig in diesen Quadranten. Unabhängig davon, ob Wärmetauscher und Befüllstutzen in unterschiedlichen Quadranten angeordnet sind, ist weiters bevorzugt, wenn die Betriebskomponenten, insbesondere der Wärmetauscher zumindest teilweise an der Mantelfläche des Kryobehälters liegen, wobei die Betriebskomponenten beispielsweise auch endseitig über eine der Endkappen ragen können, z.B. wenn diese konvex gekrümmt ist.

Je nach Anwendungsfall kann es voreilhaft sein, die genannten Zwickel kleiner vorzusehen als eingangs definiert, beispielsweise um die Sicherheit der Anschlussleitung zu erhöhen oder einfach um die Montage der Komponenten leichter zu bemessen.

Bevorzugt kann die Anschlussleitung beispielsweise durch einen ersten Teilzwickel geführt sein, der ein Unterbereich des Hinterradzwickels ist, wobei der erste Teilzwickel durch einen Raum gebildet ist, der durch die Rahmenebene, die Außenebene, Hinterebene, die Oberebene, eine vertikale hintere Abstandsebene und eine horizontale untere Abstandsebene begrenzt ist, wobei die hintere Abstandsebene bzw. die untere Abstandsebene in einem Abstand von 1 cm bis 30 cm hinter der Hinterebene bzw. unter der Oberebene liegt.

Auch könnte die Anschlussleitung durch einen zweiten Teilzwickel geführt sein, der ein Unterbereich des Vorderradzwickels ist, wobei der zweite Teilzwickel durch einen Raum gebildet ist, der durch die Rahmenebene, die Außenebene, Vorderebene, die Oberebene, eine vertikale vordere Abstandsebene und eine horizontale untere Abstandsebene begrenzt ist, wobei die vordere Abstandsebene bzw. die untere Abstandsebene in einem Abstand von 1 cm bis 30 cm vor der Vorderebene bzw. unter der Oberebene liegt.

Weiters kann vorteilhaft sein, wenn die Anschlussleitung durch einen vorderen dritten Teilzwickel und/oder hinteren dritten Teilzwickel geführt ist, die jeweils ein Unterbereich des Unterbauzwickels sind, wobei der vordere dritte Teilzwickel durch einen Raum gebildet ist, der durch die Rahmenebene, die Außenebene, Vorderebene, die Unterebene, eine vertikale hintere Abstandsebene und eine horizontale untere Abstandsebene begrenzt ist, wobei der hintere dritte Teilzwickel durch einen Raum gebildet ist, der durch die Rahmenebene, die Außenebene, die Hinterebene, die Unterebene, eine vertikale vordere Abstandsebene und eine horizontale untere Abstandsebene begrenzt ist, wobei die hintere Abstandsebene bzw. die vordere Abstandsebene bzw. die untere Abstandsebene einem Abstand von 1 cm bis 30 cm hinter der Vorderebene, vor der Hinterebene bzw. unter der Unterebene liegt.

In einer weiteren vorteilhaften Ausführungsform kann die Anschlussleitung durch einen vierten Teilzwickel geführt sein, der ein Unterbereich des Sattelaufliegerzwickels ist, wobei der vierte Teilzwickel durch einen Raum gebildet ist, der durch die Rahmenebene, die Außenebene, die Oberebene, eine horizontale untere Abstandsebene, eine vertikale vordere Abstandsebene und eine vertikale hintere Abstandsebene begrenzt ist, wobei die untere Abstandsebene, die vordere Abstandsebene bzw. die hintere Abstandsebene in einem Abstand von 1 cm bis 30 cm über der Oberebene, vor einem Anlenkpunkt des Sattelaufliegers am Fahrzeugrahmen bzw. hinter dem Anlenkpunkt liegt.

Vorteilhafte und nicht einschränkende Ausführungsformen der Erfindung werden nachfolgend anhand der Zeichnungen näher erläutert.
Figur 1 zeigt ein Fahrzeug mit darauf montierten Kryobehältern in einer Draufsicht.
Figur 2 zeigt ein Fahrzeug mit darauf montiertem Sattelauflieger in einer Seitenansicht.
Figur 3 zeigt das Fahrzeug von Figur 2, wobei Zwickel für die erfindungsgemäße Leitungsführung eingezeichnet sind.
Figur 4 zeigt den Sattelträgerzwickel von Figur 3 in einer Draufsicht.
Figur 5 zeigt eine erste erfindungsgemäße Ausführungsform, bei der die Anschlussleitung durch einen Hinterradzwickel geführt ist.
Figur 6 zeigt die Führung der Anschlussleitung von Figur 5 in einer Seitenansicht.
Figur 7 zeigt die Führung der Anschlussleitung von Figur 5 in einer Hinteransicht.
Figur 8 zeigt die Ausführungsform von Figur 5 in einer Perspektivansicht von hinten.
Figur 9 zeigt eine alternative Ausführungsform einer Abdeckung für eine durch den Hinterradzwickel geführte Anschlussleitung.
Figur 10 zeigt eine zweite erfindungsgemäße Ausführungsform, bei der die Anschlussleitung durch einen Unterbauzwickel geführt ist.
Figur 11 zeigt die Führung der Anschlussleitung von Figur 10 in einer Seitenansicht.
Figur 12 zeigt die Führung der Anschlussleitung von Figur 10 in einer Vorderansicht.
Figur 13 zeigt eine dritte erfindungsgemäße Ausführungsform, bei der die Anschlussleitung durch einen Unterbauzwickel geführt ist.
Figur 14 zeigt die Führung der Anschlussleitung von Figur 13 in einer Seitenansicht.
Figur 15 zeigt die Führung der Anschlussleitung von Figur 13 in einer Hinteransicht.
Figur 16 zeigt eine vierte erfindungsgemäße Ausführungsform, bei der die Anschlussleitung durch einen Sattelaufliegerzwickel geführt ist.
Figur 17 zeigt die Führung der Anschlussleitung von Figur 16 in einer Seitenansicht.
Figur 18 zeigt die Führung der Anschlussleitung von Figur 16 in einer Hinteransicht.
Figur 19 zeigt die Ausführungsform von Figur 16 in einer Perspektivansicht von hinten.
Figur 20 zeigt Unterbereiche, in denen die Anschlussleitung außerhalb des zur Verfügung stehenden Bauraumes geführt werden kann.
Figur 21 zeigt eine fünfte erfindungsgemäße Ausführungsform, bei der eine Betriebskomponente im Hinterradzwickel angeordnet ist.
Figur 22 zeigt die Ausführungsform von Figur 21 in einer Seitenansicht.
Figur 23 zeigt eine sechste erfindungsgemäße Ausführungsform, bei der Betriebskomponenten im Hinterradzwickel, Unterbauzwickel und Sattelaufliegerzwickel angeordnet sind.
Figur 24 zeigt die Ausführungsform von Figur 23 in einer Seitenansicht.

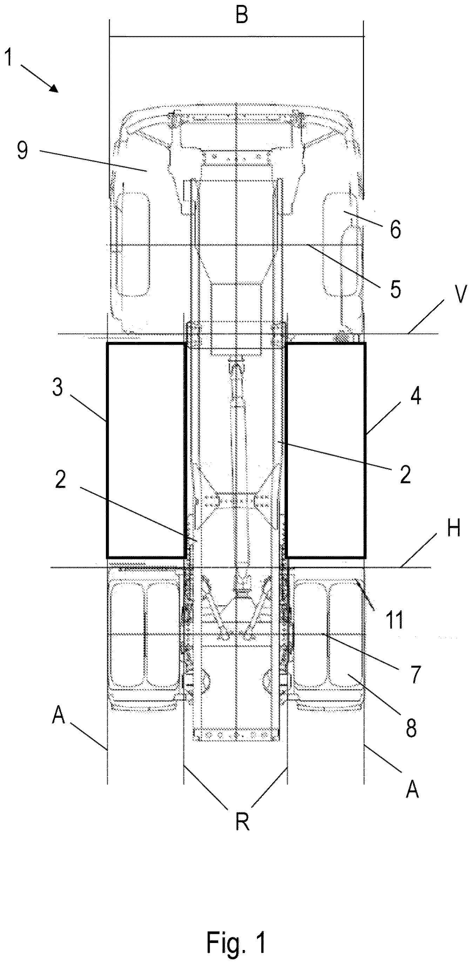

Figur 1 zeigt ein Fahrzeug 1 mit einem Fahrzeugrahmen 2, auf dem zwei Kryobehälter 3, 4 montiert sind. Im Allgemeinen kann jedoch auch nur ein Kryobehälter 3 an einer Seite des Fahrzeugrahmens 2 montiert sein. Die Kryobehälter 3, 4 lagern Kryofluid, das als Kraftstoff für einen Verbraucher wie einen Motor oder einer Brennstoffzelle des Fahrzeugs 1 verwendet wird, sodass die Kryobehälter 3, 4 auch als Kraftstofftanks bezeichnet werden.

Das in den zwei Kryobehältern 3, 4 gelagerte Kryofluid kann beispielsweise Wasserstoff sein, sodass der jeweilige Kryobehälter 3, 4 ein Wasserstoffbehälter ist, oder das Kryofluid kann LNG (Liquefied Natural Gas) sein, sodass der Kryobehälter 3, 4 ein LNG-Behälter ist. Je nach Kryofluid ist der Kryobehälter 3, 4 somit dazu ausgelegt, Kryofluid bei Temperaturen von beispielsweise unter 150 Kelvin, im Fall von Wasserstoff sogar von unter 50 Kelvin oder unter 30 Kelvin oder im Wesentlichen 20 Kelvin, zu lagern. Je nach Anwendung könnte der Kryobehälter 3, 4 beispielsweise zur Lagerung von sLH2 (subcooled liquid hydrogen) oder CcH2 (cryo-compressed hydrogen) ausgebildet und damit auch für entsprechende hohe Drücke ausgelegt sein, z.B. für Maximaldrücke zwischen 5 bar und 350 bar.

Das Fahrzeug 1 weist eine Vorderachse 5 mit Vorderrädern 6 und eine Hinterachse 7 mit Hinterrädern 8 auf. Gegebenenfalls kann das Fahrzeug 1 noch weitere Radachsen aufweisen, beispielsweise eine weitere Hinterachse hinter der dargestellten Hinterachse 7, wobei für die hierin dargestellte Erfindung lediglich die sich jeweils zugewandte Vorderachse 6 und Hinterachse 7 betrachtet werden. Weist eine Radachse 5, 7 mehrere Räder pro Seite auf, wie dies beispielsweise bei der Hinterachse 7 von Figur 1 gezeigt ist, werden diese zwecks Einfachheit als einziges Rad angesehen.

Wie in Figur 1 dargestellt verbindet der Fahrzeugrahmen 2 die Vorderachse 5 und die Hinterachse 7 strukturell. Der Fahrzeugrahmen 2 nimmt jedoch nicht die volle Breite B des Fahrzeugs 1 ein, sondern wird durch die Breite der Fahrerkabine 9, die Breite der Schmutzfänger 10 des Vorderrades 6 und/oder die Breite der Schmutzfänger 11 des Hinterrades 8, im Allgemeinen von der Breite der Fahrzeugkarosserie, definiert. Angemerkt sei, dass der Schmutzfänger 10 des Vorderrads 6 auch ein Teil der Fahrerkabine 9 sein kann, wie beispielsweise in Figur 1 dargestellt.

Zwischen der Vorderachse 5 und der Hinterachse 7 liegt überdies ein Bereich vor, an dem sich keine strukturellen Komponenten über die volle Breite B des Fahrzeugs 1 befinden. Dieser Bereich wird als der zur Verfügung stehende Bauraum 12 für die Kryobehälter 3, 4 eingesetzt, d.h. die Kryobehälter 3, 4 sollen sich beispielsweise vollständig in ihrem jeweiligen Bauraum 12 befinden und z.B. nicht straßenseitig über die Breite B des Fahrzeugs 1 hinausragen. Zu diesem Zweck kann der zur Verfügung stehende Bauraum 12 wie folgt begrenzt werden. Die im folgenden verwendeten Begriffe "vorne", "hinten", "oben", "unten", "horizontal" und "vertikal" verstehen sich jeweils als Relativbegriffe zum Fahrzeug 1. Insbesondere bezeichnet "vorne" die in der normalen Fahrtrichtung liegende Seite und "hinten" die der Fahrtrichtung abgewandte Seite. Die normale Fahrtrichtung wird als Richtung von der Hinterseite ("hinten") des Fahrzeugs 1 zur Vorderseite ("vorne") des Fahrzeugs 1 verstanden und kann auch als Fahrzeugrichtung bezeichnet werden.

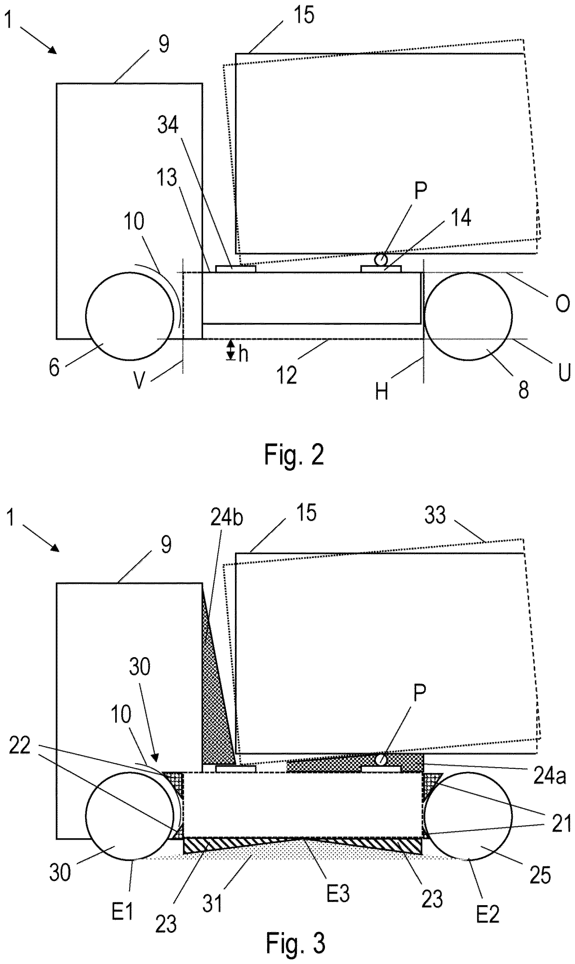

Unter Verweis auf die Figuren 1 und 2 wird der zur Verfügung stehende Bauraum 12 nun näher abgehandelt.

Vorne ist der zur Verfügung stehende Bauraum 12 für die Kryobehälter 3, 4 durch eine vertikale Vorderebene V begrenzt. Diese Vorderebene V kann am Schmutzfänger 10 (schematisch in Figur 2 gezeigt) des Vorderrads 6 anliegen, d.h. liegt tangential am Schmutzfänger 10 des Vorderrads 6 an, und ist dem Hinterrad 8 zugewandt. In einigen Fällen, wie in Figur 2, weist das Fahrzeug 1 keinen Schmutzfänger 10 für das Vorderrad 6 auf, sodass der zur Verfügung stehende Bauraum 12 für die Kryobehälter 3, 4 größer ist und die vertikale Vorderebene V unmittelbar am Vorderrad 6, d.h. tangential am Vorderrad 6, anliegen kann und dem Hinterrad 8 zugewandt ist. In den Beispielen der Figuren 1 und 2 ist eine Fahrerkabine 9 dargestellt, die gleichfalls den zur Verfügung stehenden Bauraum 12 eingrenzen kann (Figur 1) oder hinter dem Vorderrad 6 eine Ausnehmung für den zur Verfügung stehenden Bauraum 12 aufweisen kann (Figur 2), damit dieser wie oben genannt durch das Vorderrad 6 bzw. dessen Schmutzfänger 10 begrenzt sein kann. Die Begrenzung des zur Verfügung stehenden Bauraumes 12 durch die Vorderebene V ist dadurch begründet, dass der Kryobehälter 3, 4 nicht in das Vorderrad 6 bzw. dessen Schmutzfänger 10 oder die Fahrerkabine 9 hineinverschoben werden kann.

Hinten ist der zur Verfügung stehende Bauraum 12 für die Kryobehälter 3, 4 durch eine vertikale Hinterebene H begrenzt. Diese Hinterebene H kann am Schmutzfänger 11 des Hinterrads 8 anliegen (Figur 1), d.h. liegt tangential am Schmutzfänger 11 des Hinterrads 8 an, und ist dem Vorderrad 6 zugewandt. In einigen Fällen (Figur 2) weist das Fahrzeug 1 keinen Schmutzfänger 11 für das Hinterrad 8 auf, sodass der zur Verfügung stehende Bauraum 12 für die Kryobehälter 3, 4 größer ist und die vertikale Hinterebene H unmittelbar am Hinterrad 8, d.h. tangential am Hinterrad 8, anliegen kann und dem Vorderrad 6 zugewandt ist. Die Begrenzung des zur Verfügung stehenden Bauraumes 12 durch die Hinterebene H ist dadurch begründet, dass der Kryobehälter 3, 4 nicht in das Hinterrad 8 bzw. dessen Schmutzfänger 11 hineinverschoben werden kann.

Auf der dem Fahrzeugrahmen 2 zugewandten Seite, d.h. in Richtung des Fahrzeuginneren, ist der zur Verfügung stehende Bauraum 12 durch eine vertikale Rahmenebene R begrenzt. Die vertikale Rahmenebene R verläuft durch die Außenseite des Fahrzeugrahmens 2, insbesondere durch eine Rahmenoberkante 13 des Fahrzeugrahmens 2. Die Begrenzung des zur Verfügung stehenden Bauraumes 12 durch die Rahmenebene R ist dadurch begründet, dass der Kryobehälter 3, 4 nicht in den Fahrzeugrahmen 2 hineinverschoben werden kann.

Auf der dem Fahrzeugrahmen 2 abgewandten Seite, d.h. in Richtung des Fahrzeugäußeren, ist der zur Verfügung stehende Bauraum 12 durch eine vertikale Außenebene A begrenzt. Die Außenebene A befindet sich in einem vorbestimmten Abstand zum Fahrzeugrahmen 2 und erstreckt sich üblicherweise ausgehend vom Fahrzeugrahmen 2 nicht über die Breite B des Fahrzeugs 1. In einer bevorzugten Ausführungsform liegt die Außenebene A daher an der Breitseite der Karosserie des Fahrzeugs 1 an. Die Begrenzung des zur Verfügung stehenden Bauraumes 12 durch die Außenebene A ist dadurch begründet, dass der Kryobehälter 3, 4 nicht die Breite B des Fahrzeugs 1 vergrößern sollte.

Unter Verweis auf Figur 2 ist auch ersichtlich, wo der zur Verfügung stehende Bauraum 12 unten bzw. oben begrenzt wird.

Unten wird der zur Verfügung stehende Bauraum 12 durch eine horizontale Unterebene U begrenzt, die auf einer Mindestbodenfreiheitshöhe h des Fahrzeugs 1 liegt. Die Mindestbodenfreiheitshöhe h ist vom Fahrzeug 1 abhängig und ist üblicherweise durch die unterste Ebene der Fahrzeugkarosserie, z.B. der Fahrerkabine 9, oder durch die unterste Ebene von am Fahrzeugrahmen 2 befindlichen Fahrzeugkomponenten begrenzt. Die Mindestbodenfreiheitshöhe h könnte auch von Normen festgeschrieben sein oder einfach synonym für eine bestimmte Sicherheitsstufe sein, denn je tiefer die Mindestbodenfreiheitshöhe h gewählt wird, desto wahrscheinlicher ist eine Kollision des Kryobehälters 3, 4 mit der darunter befindlichen Straße, wenn diese uneben ist.

Oben wird der zur Verfügung stehende Bauraum 12 durch eine horizontale Oberebene O begrenzt. Die Oberebene O verläuft in der Regel durch die Rahmenoberkante 13 und definiert eine Ebene, über welche keine Elemente des Fahrzeugrahmens 2 ragen. Über der Rahmenoberkante 13 kann sich jedoch insbesondere eine Sattelkupplungsplatte 14 befinden, welche einen auf dem Fahrzeug 1 aufliegenden Sattelauflieger 15 anlenkt, siehe die Figuren 2 und 3. Die Begrenzung des zur Verfügung stehenden Bauraumes 12 durch die Oberebene O ist dadurch begründet, dass der Kryobehälter 3, 4 nicht in einem Schwenkbereich des Sattelaufliegers 15 liegen darf, um Kollisionen zwischen dem Kryobehälter 3, 4 und dem Sattelauflieger 15 zu verhindern.

Der zur Verfügung stehende Bauraum 12 ist somit durch einen gedachten Quader vorgegeben, wie auch im Stand der Technik allgemein anerkannt ist. Der Kryobehälter 3, 4 ist somit im jeweiligen zur Verfügung stehenden Bauraum 12 angeordnet, üblicherweise vollständig im zur Verfügung stehenden Bauraum 12. Zurückkommend auf Figur 1 ist ersichtlich, dass sowohl links als auch rechts des Fahrzeugrahmens 2 ein Bauraum 12 für jeweils einen Kryobehälter 3, 4 zur Verfügung steht. Die Kryobehälter 3, 4 müssen jedoch nicht baugleich sein und auch der zur Verfügung stehende Bauraum 1 kann auf beiden Seiten unterschiedlich groß sein, beispielsweise aufgrund einer asymmetrischen Fahrerkabine 9 oder am Rahmen montierter Fahrzeugkomponenten wie z.B. Katalysatoren oder sonstiger Zusatzaggregate.

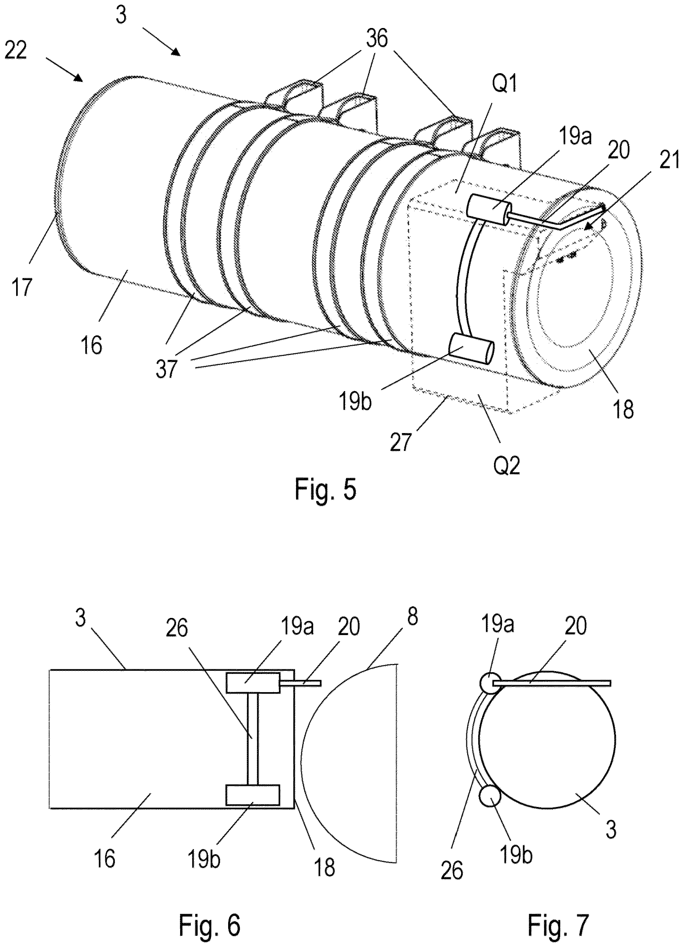

Es versteht sich, dass der jeweilige Kryobehälter 3, 4 den zur Verfügung stehenden Bauraum 12 nicht vollständig ausfüllen muss. Der Kryobehälter 3, 4 kann beispielsweise wie in den Figuren 5 bis 18 gezeigt im Wesentlichen zylindrisch sein und eine Mantelfläche 16 und zwei Endkappen 17, 18 aufweisen, die wie dargestellt plan sein können. Alternativ könnten die Endkappen 17, 18 auch wie im Stand der Technik bekannt gekrümmt, d.h. konvex gekrümmt, sein. Bereits aus diesen geometrischen Überlegungen heraus wird es in der Regel nicht vorkommen, dass der Kryobehälter 3, 4 den zur Verfügung stehenden Bauraum 12 vollständig ausfüllt.

Um das Volumen des Kryobehälters 3, 4 zu maximieren, wird jedoch üblicherweise zumindest vorgesehen, dass der unterste Punkt des Kryobehälters 3, 4, d.h. die unterste Linie bei einem zylindrischen Kryobehälter 3, 4, mit der Unterebene U zusammenfällt. Alternativ oder zusätzlich kann der oberste Punkt des Kryobehälters 3, 4, d.h. die oberste Linie bei einem zylindrischen Kryobehälter 3, 4 mit der Oberebene O zusammenfallen. Der maximale Durchmesser des Kryobehälters 3, 4 ergibt sich in der Regel durch den Abstand der Oberebene O zur Unterebene U (außer der maximale Durchmesser wird durch einen geringeren Abstand der Rahmenebene R zur Außenebene A weiter reduziert, was üblicherweise jedoch nicht der Fall ist).

Alternativ oder zusätzlich kann vorgesehen werden, dass zumindest eine der planen Endkappen 16, 17 bzw. eine Scheitelebene einer gekrümmten Endkappe mit der Vorderebene V und/oder der Hinterebene H zusammenfällt, d.h. der Kryobehälter 3, 4 ist zumindest mit einem Ende mit dem vorderen oder hinteren Ende des zur Verfügung stehenden Bauraumes 12 ausgerichtet. Um eine maximale Länge des Kryobehälters 3 ,4 zu erzielen, berühren beide Endkappen 16, 17 die Vorderebene V bzw. Hinterebene H.

Im restlichen Platz des zur Verfügung stehenden Bauraumes 12, der nicht vom Kryobehälter 3, 4 ausgefüllt ist, können Betriebskomponenten 19a, 19b, d.h. sogenannte Manifold-Komponenten, angeordnet werden, siehe die Figuren 5 bis 19. Hierzu zählen beispielsweise ein Wärmetauscher, der einen Eingang aufweist, an dem eine in den Kryobehälter 3, 4 geführte Leitung angeschlossen ist. Der Wärmetauscher expandiert vom Kryobehälter 3, 4 entnommenes Kryofluid, um das Kryofluid auf eine für den Verbraucher geeignete Temperatur zu bringen. Ein Ausgang des Wärmetauschers kann mit einer Verbindungsleitung verbunden werden, die zum Verbraucher oder zu einem weiteren Tank geführt ist, um diesem das Kryofluid zuzuführen. Der Wärmetauscher kann einen weiteren Eingang und einen weiteren Ausgang für Wärmetauschfluid aufweisen. Der Wärmetauscher und dessen Anschlussleitungen sind Teil eines Entnahmesystems, welches ferner Leitungen zwischen Kryobehälter 3, 4 und Wärmetauscher bzw. Wärmetauscher und Verbraucher umfassen kann. Auch weitere Betriebskomponenten des Entnahmesystems wie Überdruckventile, Rückschlagventile Handventile und/oder ein sogenannter Economizer werden zu den Betriebskomponenten 19a, 19b gezählt.

Weitere Betriebskomponenten 19a, 19b, die nicht dem Entnahmesystem zuzuordnen sind, sind beispielsweise eine Befüllkupplung, Armaturen, Ventile und Bestandteile eines Befüllsystems des Kryobehälters 3, 4 und/oder eines Entlüftungssystems des Kryobehälters 3, 4 sowie ein Steuergerät, welches beispielsweise den Economizer oder Ventile der genannten Systeme ansteuert.

Alle genannten Betriebskomponenten 19a, 19b können zusammen mit dem Kryobehälter 3, 4 vollständig oder zumindest teilweise im oben definierten zur Verfügung stehenden Bauraum 12 untergebracht werden. In verbreiteten Ausführungsformen aus dem Stand der Technik werden sämtliche Betriebskomponenten zwischen einer der Endkappen 17, 18 und der nächstliegenden Vorderebene V bzw. Hinterebene H angeordnet. Hierdurch verkürzt sich jedoch die größtmögliche Längserstreckung des Kryobehälters 3, 4. Es kann daher auch vorgesehen werden, einzelne der Betriebskomponenten in Zwickeln zwischen der Mantelfläche 16 des Kryobehälters 3, 4 und dem zur Verfügung stehenden Bauraum 12 anzuordnen. Diese Zwickel stehen selbst dann zur Verfügung steht, wenn die Mantelfläche 16 die Oberebene O, die Unterebene U, die Rahmenebene R und die Außenebene A berührt. Insbesondere kann der Wärmetauscher langgestreckt sein und parallel zum Kryobehälter 3, 4 an dessen Mantelfläche 16 angeordnet werden und dabei vollständig im zur Verfügung stehenden Bauraum 12 angeordnet werden.

Wenn nun der zur Verfügung stehende Bauraum 12 so weit wie möglich vom Kryobehälter 3, 4 bzw. den genannten Betriebskomponenten 19a, 19b ausgefüllt ist, ist es eine Herausforderung, die vom Kryobehälter 3, 4 bzw. von den Betriebskomponenten 19a, 19b ausgehenden Anschlussleitungen 20 zum Fahrzeug 1, insbesondere zum Verbraucher oder der Fahrerkabine 9 des Fahrzeugs 1, zu führen, da kein weiterer Raum bzw. nur mehr wenig Raum im zur Verfügung stehenden Bauraum 12 vorhanden ist. Unter den Begriff der Anschlussleitungen 20 fallen hierbei insbesondere auch Anschlussstutzen an den Kryobehälter 3, 4.

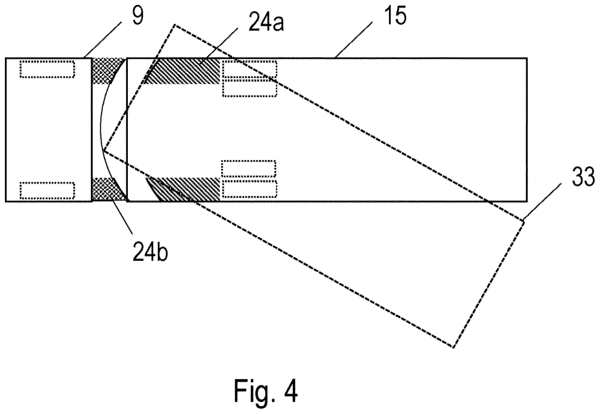

Es ist daher erfindungsgemäß vorgesehen, die Anschlussleitungen 20 seitlich in oder entgegen der Fahrtrichtung, oberhalb oder unterhalb des Kryobehälters 3, 4 aus dem Bauraum 12 an bestimmten Stellen herauszuführen, an denen keine Sicherheitsbedenken bestehen. Diese Stellen sind in den Figuren 3 und 4 dargestellt und werden als Hinterradzwickel 21, Vorderradzwickel 22, Unterraumzwickel 23 und Sattelaufliegerzwickel 24 bezeichnet. Der Sattelaufliegerzwickel 24 setzt sich seinerseits aus zwei Teilzwickeln 24a und 24b zusammen, wie unten näher ausgeführt und in Figur 4 dargestellt ist.

Die Figuren 5 bis 9 zeigen Ausführungsformen, in denen eine Anschlussleitung 20 durch den Hinterradzwickel 21 geführt ist. Der Hinterradzwickel 21 ist begrenzt von der Oberebene O, der Unterebene U, der Rahmenebene R, der Außenebene A, der Hinterebene H und einem ersten Abzugsvolumen 25, welches durch das Hinterrad 8 oder dessen Schmutzfänger 11 gebildet ist und frei von Anschlussleitungen 20 oder Betriebsleitungen 19a, 19b bleibt. In anderen Worten wird die Anschlussleitung 20 durch einen Bereich geführt, der zwischen der Hinterebene H und dem Hinterrad 8 liegt, und seitlich bzw. oben und unten begrenzt ist durch die Oberebene O, die Unterebene U, die Rahmenebene R und die Außenebene A. Vereinfacht gesprochen liegt der Hinterradzwickel 21 hinter dem Bauraum 12 und oberhalb bzw. unterhalb des Hinterrads 8 und nutzt dessen Rundung aus. Sofern das Hinterrad 8 nicht die gesamte Breite zwischen Außenebene A und Rahmenebene R ausfüllt, kann als erstes Abzugsvolumen 25 eine Projektion des Hinterrads 8 entlang der Hinterradachse 7 angesehen werden. Alternativ kann das Abzugsvolumen 25 durch den Schmutzfänger 11 des Hinterrades 8 bzw. der Projektion des Schmutzfängers 11 entlang der Hinterradachse 7 gebildet sein. Es wird somit ein Raum ausgenutzt, der zwar dem Kryobehälter 3, 4 nicht zugänglich ist, der Anschlussleitung 20 jedoch schon.

Die Figuren 5 bis 7 zeigen eine Anschlussleitung 20, die ausgehend vom Fahrzeugrahmen 2, und zwar unterhalb der Oberebene O und oberhalb der Unterebene U, durch den Hinterradzwickel 21 geführt ist. Im dargestellten Beispiel wird die Anschlussleitung 20 horizontal und normal zur Fahrtrichtung bis zu einer Seite des Kryobehälters 3 geführt, die dem Fahrzeugrahmen 2 abgewandt ist. Dort wird die Anschlussleitung 20 horizontal und parallel zur Fahrtrichtung in einen oberen, dem Fahrzeugrahmen 2 abgewandten Quadranten Q1 des zur Verfügung stehenden Bauraumes 12 geführt, wo eine Betriebskomponente 19a angeordnet ist, beispielsweise der Wärmetauscher. Es ist ersichtlich, dass diese Leitungsführung selbst dann möglich ist, wenn die Endkappe 18 plan ausgeführt ist und der Kryobehälter 3, 4 unmittelbar an der Hinterebene H liegt.

Figur 5 zeigt weiters, dass eine weitere Betriebskomponente 19b, beispielsweise ein Anschlussstutzen an den Kryobehälter 3, 4, d.h. jene Stelle, an der eine Leitung durch die Mantelfläche 16 in den Kryobehälter 3, 4 geführt ist, in einem unterem, dem Fahrzeugrahmen 2 abgewandten Quadranten Q2 des Bauraumes 12 angeordnet ist. Eine Verbindungsleitung 26 kann von der weiteren Betriebskomponente 19b zur erstgenannten Betriebskomponente 19a geführt werden. Bevorzugt verlässt die Verbindungsleitung 26 den zur Verfügung stehenden Bauraum 12 nicht, d.h. steht straßenseitig nicht über die Außenebene A hervor. Dies kann besonders dann erzielt werden, wenn der Abstand zwischen Außenebene A und Rahmenebene R größer ist als der Abstand zwischen Oberebene O und Unterebene U, denn in diesem Fall kann ein Kryobehälter 3, 4 mit kreisrundem Querschnitt die gesamte Höhe zwischen Oberebene O und Unterebene U ausfüllen und einen Platz für die Verbindungsleitung 26 an der Außenebene A lassen, wenn der Kryobehälter 3 ,4 beispielsweise bündig an der Rahmenebene R anliegt. Im Allgemeinen kann dies auch für die weiteren, unten erläuterten Ausführungsformen vorgesehen werden, bei denen die Anschlussleitung 20 durch den Vorderradzwickel 22, den Unterbauzwickel 23 oder den Sattelaufliegerzwickel 24 geführt ist.

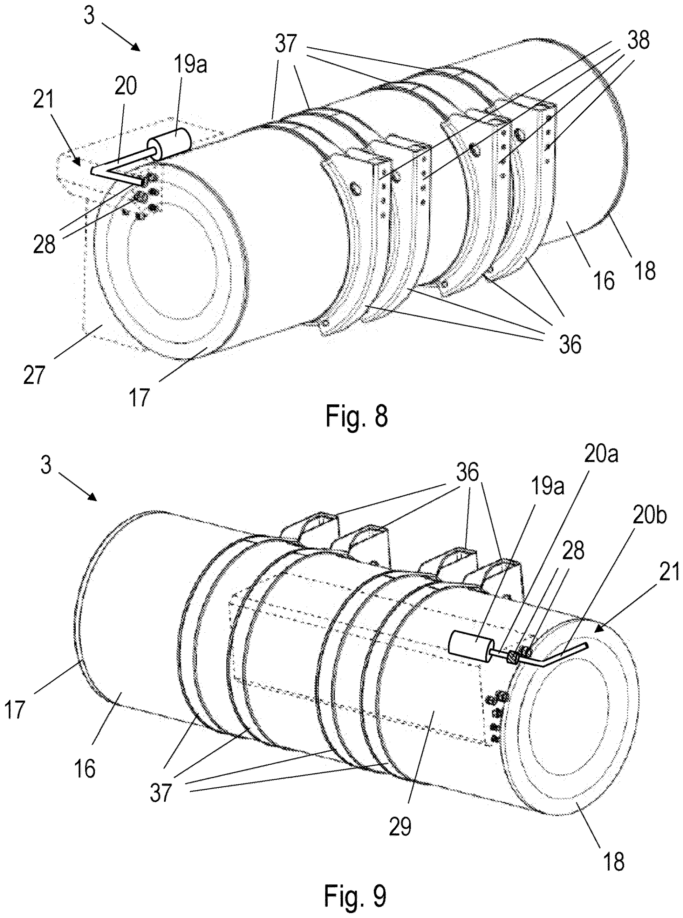

Weiters ist in Figur 5 eine Abdeckung, konkret eine Radzwickelabdeckung 27, dargestellt, welche die Anschlussleitung 20 im Hinterradzwickel 21 zumindest teilweise umschließt, wobei die Radzwickelabdeckung 27 in den oberen, dem Fahrzeugrahmen 2 abgewandten Quadranten Q1 des Bauraumes 12 geführt ist und dort die Anschlussleitung 20 und bevorzugt auch eine Betriebskomponente 19a umschließt. Die Radzwickelabdeckung 27 kann auch die Verbindungsleitung 26 und die weitere Betriebskomponente 19b umschließen, wie in Figur 5 gezeigt. Insbesondere kann die Radzwickelabdeckung 27 im Hinterradzwickel 21, bevorzugt im Wesentlichen an der Rahmenebene R oder dieser zugewandt, eine Schnittstelle 28 für einen Anschluss an die Anschlussleitung 20 aufweisen. Damit kann der Kryobehälter 3, 4 zusammen mit der Anschlussleitung 20 und gegebenenfalls mit den Betriebskomponenten 19a, 19b und der Radzwickelabdeckung 27 eine eigenständige, modulare Komponente bilden, die in einfacher Weise am Fahrzeug 1 montierbar ist und über die Schnittstelle 28 an fahrzeugseitige Leitungen anschließbar ist. Jener Teil der Anschlussleitung 20, der ausgehend von der Schnittstelle 28 in den Kryobehälter 3, 4 bzw. zur Betriebskomponente 19a, 19b geführt ist, wird als behälterseitige Anschlussleitung 20a bezeichnet und jener Teil der Anschlussleitung 20, der ausgehend von der Schnittstelle 28 zum Fahrzeugrahmen 2 bzw. zum Fahrzeug 1 oder dessen Verbraucher geführt ist, wird als fahrzeugseitige Anschlussleitung 20b bezeichnet, siehe insbesondere die im Folgenden beschriebene Figur 9.

In Figur 9 ist gezeigt, dass eine alternative Abdeckung 29 vorgesehen werden kann, die zwar nur die Anschlussleitung 20 und gegebenenfalls Betriebskomponenten 19a, 19b an der Mantelfläche 16 und nicht die Anschlussleitung 20 im Hinterradzwickel 21 überdeckt. Jedoch weist diese Abdeckung 29 Schnittstellen 28 auf, die unmittelbar an den Hinterradzwickel 21 angrenzen, sodass eine an die Schnittstelle 28 angeschlossene, zum Fahrzeug 1 geführte Anschlussleitung 20 unwillkürlich durch den Hinterradzwickel 21 geführt wird. Auch diese Ausführungsform weist somit im Wesentlichen dieselben Vorteile wie die Radzwickelabdeckung 27 auf. Insbesondere können Anschlussleitungen an dieser Position sehr leicht montiert werden und gewartet bzw. regelmäßig auf Dichtheit überprüft werden.

In weiteren Ausführungsformen könnte die Anschlussleitung 20 auch unmittelbar an der Endkappe 18 in den Kryobehälter 3, 4 geführt sein, d.h. dort als beispielsweise parallel zur Fahrtrichtung ausgeführter Anschlussstutzen ausgeführt sein, und von dort in den Hinterradzwickel 21 geführt sein. Der Anschlussstutzen könnte in dieser Ausführungsform beispielsweise unmittelbar in den Hinterradzwickel 21 ragen und hierfür z.B. außermittig an der Endkappe 18 vorgesehen sein. Diese Ausführungsform macht auch bei gekrümmten Endkappen Sinn, denn ein endkappenseitiger Anschlussstutzen muss eine gewisse Länge aufweisen, und mit der vorgeschlagenen Lösung muss der Anschlussstutzen nicht vollständig im zur Verfügung stehenden Bauraum 12 vorliegen, sondern kann auch den Raum des Hinterradzwickels 21 ausnutzen. Der Anschlussstutzen könnte an allen vier Quadranten des Bauraumes 12, d.h. dem oberen, dem Fahrzeugrahmen 2 abgewandten Quadranten Q1, dem unteren, dem Fahrzeugrahmen 2 abgewandten Quadranten Q2, oder dem unteren bzw. oberen dem Fahrzeugrahmen 2 zugewandten Quadranten des Bauraumes 12 vorgesehen sein und von dort in den Hinterradzwickel 21 oder den später erläuterten Vorderradzwickel 22 geführt sein.

Im Allgemeinen, unabhängig davon, ob die Anschlussleitung 20 zur Endkappe oder zu einer an der Mantelfläche vorliegenden Betriebskomponente 19a, 19b geführt ist, kann die Anschlussleitung 20 in einen der vier Quadranten des Bauraumes 12 geführt sein. Wenn die Anschlussleitung 20 in einen der unteren Quadranten des Bauraumes 12 geführt ist, wird diese üblicherweise im Hinterradzwickel 21 unterhalb des Hinterrads 8 geführt.

Alternativ oder zusätzlich zu einer Führung einer Anschlussleitung 20 durch den Hinterradzwickel 21 kann eine Anschlussleitung 20 durch den Vorderradzwickel 22 geführt sein. Analog zum Hinterradzwickel 21 ist der Vorderradzwickel 22 von der Oberebene O, der Unterebene U, der Rahmenebene R und der Außenebene A begrenzt und liegt zwischen der Vorderebene V und einem zweiten Abzugsvolumen 30 (Figur 3), welches durch das Vorderrad 6 oder dessen Schmutzfänger 10 gebildet ist. Alle für den Hinterradzwickel 21 beschriebenen Ausführungsformen können gleichfalls für den Vorderradzwickel 22 eingesetzt werden, sodass zur Vermeidung von Wiederholungen auf weitere Ausführungen verzichtet wird.

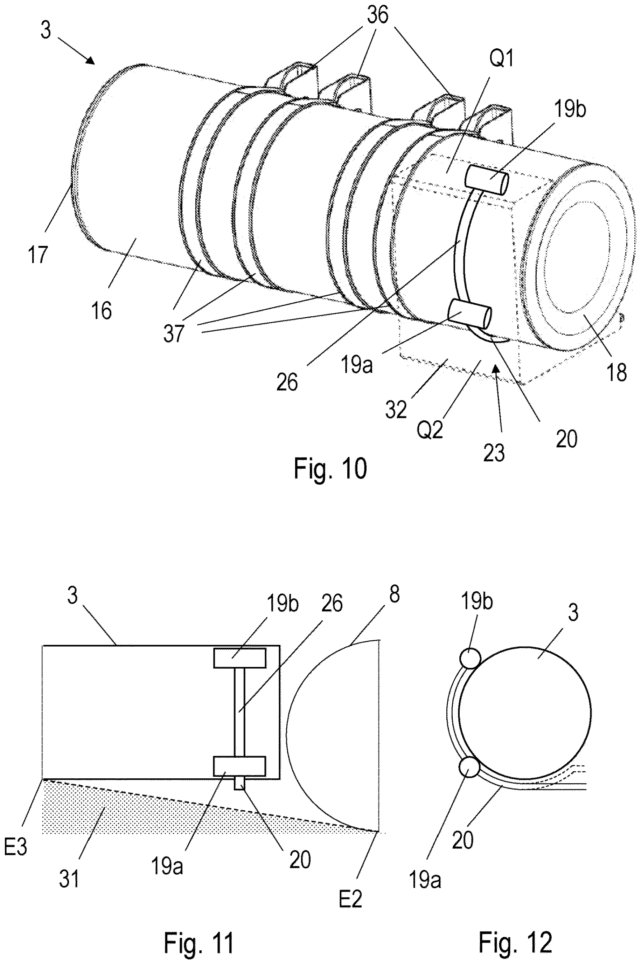

Wie in den Figuren 10 bis 13 gezeigt kann die Anschlussleitung 20 auch durch den Unterbauzwickel 23 geführt werden, und zwar alternativ oder zusätzlich zur Führung einer Anschlussleitung 20 durch den Hinterradzwickel 21 und/oder den Vorderradzwickel 22. Der Unterbauzwickel 23 ist von der Rahmenebene R, der Außenebene A, der Vorderebene V, der Hinterebene H begrenzt und liegt zwischen der Unterebene U und einem dritten Abzugsvolumen 31, welches durch ein extrudiertes Dreieck gebildet wird, dessen erste Extrusionskante E1 durch den untersten Punkt des Vorderrades 6 verläuft, dessen zweite Extrusionskante E2 durch den untersten Punkt des Hinterrades 8 verläuft und dessen dritte Extrusionskante E3 äquidistant zwischen Hinterrad 8 und Vorderrad 6 durch die Unterebene U verläuft. Das extrudierte Dreieck ist somit ein gleichschenkeliges Dreieck mit einer Extrusionsrichtung normal zur Fahrtrichtung. Das extrudierte Dreieck bildet einen Bereich, der besonders anfällig für Schläge ist, beispielsweise wenn das Fahrzeug 1 über eine unebene Straße fährt. Erfindungsgemäß wurde jedoch festgestellt, dass der Unterbauzwickel 23 wenig schlaganfällig ist, da dieser Bereich durch die Räder 6, 8 geschützt ist. Es ist unwahrscheinlich, dass die Straße derart uneben ist, dass die Räder 6, 8 einen Schlag der Straße oder eines darauf befindlichen Objekts auf den Unterbauzwickel 23 zulassen, weshalb die Anschlussleitung 20 erfindungsgemäß auch durch den Unterbauzwickel 23 geführt werden kann.

Die Figuren 10 bis 12 zeigen eine Anschlussleitung 20, die ausgehend vom Fahrzeugrahmen 2 bzw. ausgehend von der Rahmenebene R, durch den Unterbauzwickel 21 geführt ist und danach in den unteren, dem Fahrzeugrahmen 2 abgewandten Quadranten Q2 des Bauraumes 12 eintritt und dort an eine Betriebskomponente 19a angeschlossen oder unmittelbar durch die Mantelfläche 16 in den Kryobehälter 3, 4 geführt ist. In der durchgezogenen Linie in Figur 12 ist dargestellt, dass die Anschlussleitung 20 unterhalb der Unterebene U von der Rahmenebene R ausgehen kann und in der gestrichelten Linie ist dargestellt, dass die Anschlussleitung 20 oberhalb der Unterebene U ausgehen und derart, d.h. vom Bauraum 12 aus, in den Unterbauzwickel 23 geführt werden kann.

Alternativ oder zusätzlich könnte ein Anschlussstutzen an der Mantelfläche 16 oder an der Endkappe 17, 18, insbesondere, wenn diese gekrümmt ist, unmittelbar nach unten in den Unterbauzwickel 23 stehen.

Zurückkommend auf die Figuren 10 bis 12 ist weiters gezeigt, dass eine weitere Betriebskomponente 19b im oberen, dem Fahrzeugrahmen 2 abgewandten Quadranten Q1 des Bauraumes 12 angeordnet sein kann, die mit der Betriebskomponente 19 über eine Verbindungsleitung 26 verbunden sein kann. Diese Verbindungsleitung 26 kann genauso ausgeführt werden, wie oben für den Hinterradzwickel 21 erläutert.

Weiters kann auch in dieser Ausführungsform eine Abdeckung, hier eine Unterbauzwickelabdeckung 32, eingesetzt werden, welche die Anschlussleitung 20 im Unterbauzwickel 23 zumindest teilweise umschließt, wobei die Unterbauzwickelabdeckung 32 in den unteren, dem Fahrzeugrahmen 2 abgewandten Quadranten Q2 des zur Verfügung stehenden Bauraumes 12 geführt ist und dort die Anschlussleitung 20 und bevorzugt auch eine Betriebskomponente 19a umschließt. Die Unterbauzwickelabdeckung 32 kann auch die Verbindungsleitung 26 und eine Betriebskomponente 19b im oberen, dem Fahrzeugrahmen 2 abgewandten Quadranten Q1 des Bauraumes 12 überdecken, wie dies in den Figuren 10 bis 12 gezeigt ist. Weiters kann die Unterbauzwickelabdeckung 32 im Unterbauzwickel 23, bevorzugt im Wesentlichen an der Rahmenebene R, eine Schnittstelle 28 für einen Anschluss an die Anschlussleitung 20 aufweisen. Alternative Ausführungen oder analoge Weiterentwicklungen wie oben für die Radzwickelabdeckung 27 beschrieben können auch für die Unterbauzwickelabdeckung 32 eingesetzt werden.

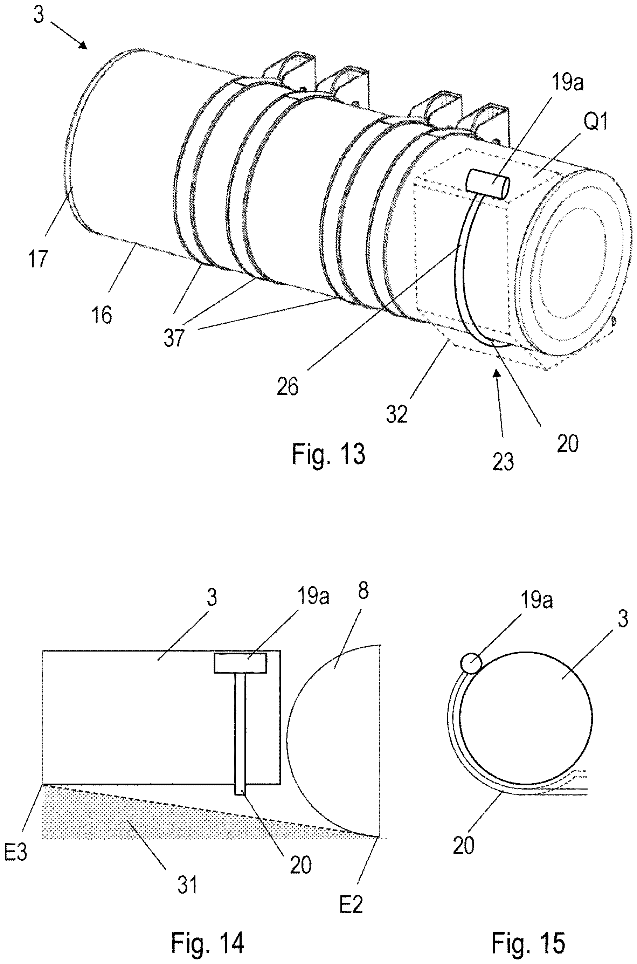

Die Figuren 13 bis 15 zeigen eine weitere Ausführungsform, bei der die Anschlussleitung 20 ausgehend von der Rahmenebene R durch den Unterbauzwickel 23 geführt ist und danach im unteren, dem Fahrzeugrahmen 2 abgewandten Quadranten Q2 des Bauraumes 12 in diesen eindringt und von dort in den oberen, dem Fahrzeugrahmen 2 abgewandten Quadranten Q1 des Bauraumes 12 geführt ist, wo sie in einer Betriebskomponente 19b münden oder unmittelbar, z.B. durch die Mantelfläche 16, in den Kryobehälter 3, 4 geführt sein kann.

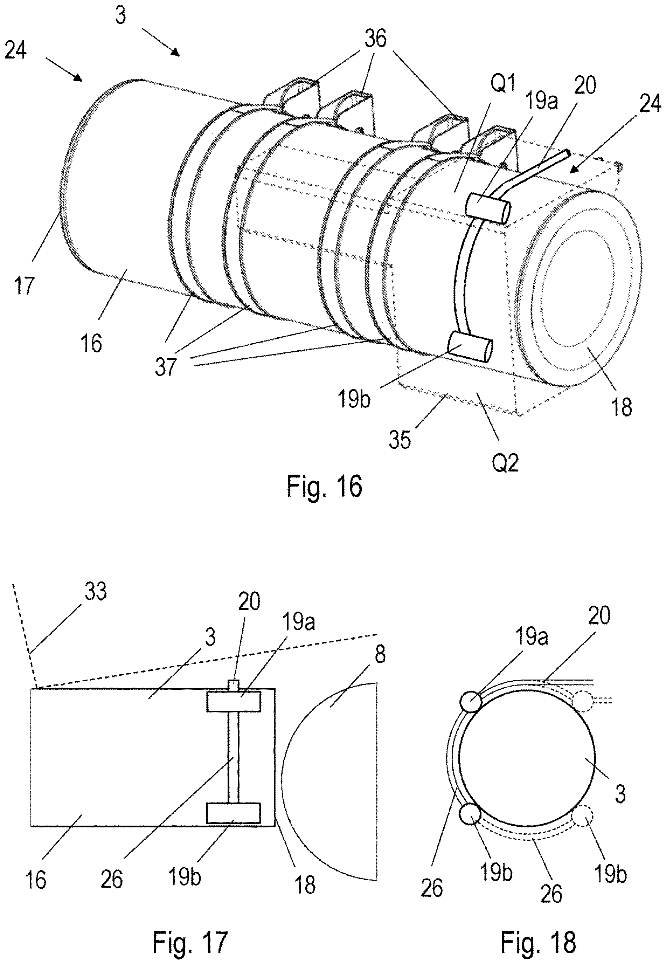

Den Figuren 16 bis 19 kann entnommen werden, dass die Anschlussleitung 20 auch durch den Sattelaufliegerzwickel 24 geführt werden kann, und zwar alternativ oder zusätzlich zur Führung einer Anschlussleitung 20 durch den Hinterradzwickel 21, den Vorderradzwickel 22 und/oder den Unterbauzwickel 23. Der Sattelaufliegerzwickel 24 ist begrenzt von der Rahmenebene R, der Außenebene A, der Vorderebene V und der Hinterebene H und liegt zwischen der Oberebene O und einem vierten Abzugsvolumen 33, welches durch einen Schwenkbereich eines am Fahrzeug 1 montierten Sattelaufliegers 15 gebildet wird.

Wie bereits oben angemerkt setzt sich der Sattelaufliegerzwickel 24 aus zwei Teilzwickeln 24a und 24b zusammen, siehe die Figuren 3 und 4. Diese ergeben sich dadurch, dass der Sattelauflieger 15 üblicherweise an einer Sattelkupplungsplatte 14 angelenkt ist, die sich auf dem Fahrzeugrahmen 2 befindet und den Anlenkpunkt P des Sattelaufliegers 15 in einer vorbestimmten Höhe über dem Fahrzeugrahmen 2 hält. Um Bewegungen während der Fahrt des Fahrzeugs 1 auszugleichen, kann der Sattelauflieger 15 üblicherweise um alle Raumwinkel um den Anlenkpunkt P rotieren. Beide Teilzwickel 24a, 24b werden sowohl durch eine Schwenkbewegung um eine horizontale, normal zur Fahrzeugrichtung liegende Schwenkachse (Figur 3) als auch durch eine vertikale Schwenkachse (Figur 4), jeweils um den Anlenkpunkt P, eingeschränkt.

Der erste Teilzwickel 24a ergibt sich durch einen Raum, der zwischen dem Sattelauflieger 15 (bzw. der unteren Seite des Sattelaufliegers 15) und dem Fahrzeugrahmen 2 liegt, wenn das der Fahrerkabine 9 zugewandte Ende des Sattelaufliegers 15 so weit wie möglich nach unten geneigt ist und beispielswiese auf dem Fahrzeugrahmen 2 oder auf einer darauf befindlichen Schutzplatte 34 zu liegen kommt. Hierbei ist jedoch zu beachten, dass der Sattelauflieger 15 auch um eine vertikale Achse um den Anlenkpunkt P verschwenkbar ist, wie in Figur 4 dargestellt, was den ersten Teilbereich 24a des Sattelaufliegerzwickels 24 weiter einschränken kann. Aus Figur 3 ist ersichtlich, dass der erste Teilzwickel 24a auch einen Raum hinter dem Anlenkpunkt 9 umfasst.

Der zweite Teilzwickel 24b ergibt sich durch einen Raum, der zwischen der Fahrerkabine 9, dem Fahrzeugrahmen 2 und dem Sattelauflieger 15 (bzw. der vorderen Seite des Sattelaufliegers 15) liegt, wenn das der Fahrerkabine 9 zugewandte Ende des Sattelaufliegers 15 so weit wie möglich nach unten geneigt ist, wobei die Rotation um die vertikale Achse wiederum mitberücksichtigt wird. Da der zweite Teilzwickel 24 nach oben offen sein kann siehe Figur 3, kann eine maximale Höhe des zweiten Teilzwickels 24b von maximal 100 cm, 50 cm, 30 cm oder 10 cm angenommen werden.

In der Regel ist der Schwenkbereich des Sattelaufliegers 15 und damit auch der Sattelaufliegerzwickel 24 einerseits durch die Position der Sattelkupplungsplatte 14 und andererseits durch die Länge des Sattelaufliegers 15 zwischen der Fahrerkabine 9 und dem Anlenkpunkt P definiert. Die Sattelkupplungsplatte 14 kann wie in Figur 3 gezeigt zwischen der Vorderachse 5 und der Hinterachse 7 oder auch über oder hinter der Hinterachse 7 angeordnet werden. Zur Vereinfachung des Sattelaufliegerzwickels 24 kann angenommen werden, dass dieser für einen Sattelauflieger 15 mit einer maximalen Länge zwischen der Fahrerkabine 9 und dem Anlenkpunkt P ausgelegt ist. Die maximale Länge ergibt sich durch das Schwenken des Sattelaufliegers 15 um horizontale als auch vertikale Achsen um den Anlenkpunkt P, siehe die Figuren 3 und 4, ohne dass der Sattelauflieger 15 mit der Fahrerkabine 9 kollidieren würde.

In den Figuren 16 bis 19 wird die Anschlussleitung 20 nur durch den ersten Teilzwickel 24a geführt, insbesondere in einem vorbestimmten Maximalabstand vor oder hinter der Sattelkupplungsplatte 14 bzw. dem Anlenkpunkt P, gesehen in Fahrrichtung des Fahrzeugs 1, wodurch im Allgemeinen der Schwenkbereich des Sattelaufliegers 15 unabhängig von dessen Länge oder sonstiger Ausgestaltung frei bleibt. Der vorbestimmte Maximalabstand kann beispielsweise 50 cm, 40 cm, 30 cm, 20 cm oder 10 cm betragen und auch nur vor oder nur hinter der Sattelkupplungsplatte 14 bzw. dem Anlenkpunkt P vorgesehen werden, wobei die Anschlussleitung 20 bevorzugt nicht auf der jeweils anderen Seite der Sattelkupplungsplatte 14 bzw. des Anlenkpunkts P geführt wird. Die maximale Höhe für den Sattelaufliegerzwickel 24, ausgehend von der Oberebene O, kann beispielsweise 5 cm, 10 cm, 15 cm, 20 cm oder 35 cm gewählt werden. Dadurch kann der Sattelaufliegerzwickel 24 auch unabhängig vom Sattelauflieger 15 definiert werden.

In den Figuren 16 bis 19 ist die Anschlussleitung 20 ausgehend von der Rahmenebene R durch den Sattelaufliegerzwickel 24 geführt und dringt danach in den oberen, dem Fahrzeugrahmen 2 abgewandten Quadranten Q1 des zur Verfügung stehenden Bauraum 12 in diesen ein, wo die Anschlussleitung 20 in den Kryobehälter 1 geführt sein oder in einer Betriebskomponente 19a münden kann. Wiederum kann eine Verbindungsleitung 26 vorgesehen werden, die vom oberen, dem Fahrzeugrahmen 2 abgewandten Quadranten Q1 des Bauraumes 12 zum unteren, dem Fahrzeugrahmen 2 abgewandten Quadranten Q2 des Bauraumes 12 geführt sein kann, wo sie in einer Betriebskomponente 19b münden oder z.B. durch die Mantelfläche 16 in den Kryobehälter 3, 4 geführt sein kann.

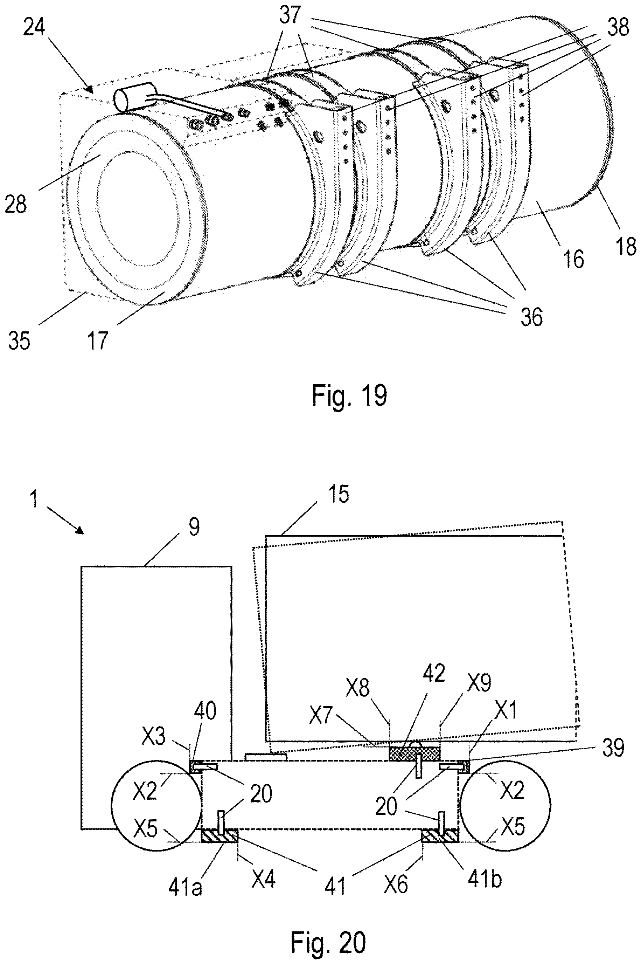

Die Figuren 16 und 19 zeigen schematisch eine Abdeckung, konkret eine Sattelaufliegerzwickelabdeckung 35, welche die Anschlussleitung 20 im Sattelaufliegerzwickel 24 zumindest teilweise umschließt. Wie dargestellt ist die Sattelaufliegerzwickelabdeckung 35 in den oberen, dem Fahrzeugrahmen 2 abgewandten Quadranten Q1 des Bauraumes 12 geführt, wo die Anschlussleitung 20 an den Kryobehälter 3, 4 und bevorzugt auch eine Betriebskomponente 19a, 19b umschließt. Alle Ausführungsformen für die obengenannten Abdeckungen können auch für die Sattelaufliegerzwickelabdeckung 35 eingesetzt werden, sodass diese insbesondere auch eine Verbindungsleitung 16 und eine Betriebskomponente 19b in einem der anderen Quadranten des Bauraumes 12 überdecken kann. Auch kann die Sattelaufliegerzwickelabdeckung 35 im Sattelaufliegerzwickel 24, bevorzugt im Wesentlichen an der Rahmenebene R bzw. dieser zugewandt, eine Schnittstelle 28 für einen Anschluss an die Anschlussleitung 20 aufweisen.

In Figur 18 ist durch die gestrichelten Linien zudem dargestellt, dass sich weitere Betriebskomponenten 19b auch in allen vier (oder alternativ in drei) der Quadranten des Bauraumes 12 befinden könnten und über weitere Verbindungsleitungen 26 verbunden sein könnten. Dies ist nicht auf eine Führung der Anschlussleitung 20 durch den Sattelaufliegerzwickel 24 beschränkt, sondern könnte auch bei einer Führung der Anschlussleitung 20 durch einen der anderen Zwickel 21 - 23 eingesetzt werden. Auch könnte die dem Fahrzeugrahmen 2 abgewandte Verbindungsleitung 26 entfallen und eine zusätzliche Anschlussleitung 20 könnte ausgehend vom Fahrzeugrahmen 2 in den unteren, dem Fahrzeugrahmen 2 zugewandten Quadranten des Bauraumes 12 geführt sein, z.B. durch den Hinterradzwickel 21, den Vorderradzwickel 22 oder den Unterbauzwickel 23. Es ist daher ersichtlich, dass alle Varianten von Führungen der Anschlussleitungen 20 durch die genannten Zwickel 21 - 24 kombiniert werden können und die Anschlussleitung 20 unabhängig vom durchsetzen Zwickel 21 - 24 in einem beliebigen der vier Quadranten des Bauraumes 12 münden kann.

Die Führung der Anschlussleitung 20 durch den Hinterradzwickel 21, Vorderradzwickel 22, Unterbauzwickel 23 und/oder den Sattelaufliegerzwickel 24 ermöglicht nicht nur eine verbesserte Ausnutzung des zur Verfügung stehenden Bauraumes 12, sondern auch eine leichtere Anbringung des Kryobehälters 3, 4 am Fahrzeugrahmen 2. Wie in den Figuren 5 bis 19 dargestellt werden die Kryobehälter 3, 4 bevorzugt auf Tragkonsolen 36 gelagert und mittels Spannbändern 37 auf den Tragkonsolen 36 festgespannt. In den dargestellten Ausführungsformen werden vier Tragkonsolen 36 eingesetzt, wobei im Allgemeinen zumindest zwei Tragkonsolen 36 eingesetzt werden. Unabhängig von der Anzahl der Tragkonsolen 36 wird in der Regel ein Spannband 37 pro Tragkonsole 36 eingesetzt.

Die Tragkonsolen 36 weisen jeweils eine Montageseite 38 zur Montage auf dem Fahrzeugrahmen 2 auf. Der Fahrzeugrahmen 2 weist eine für die Tragkonsolen 36 komplementäre Fläche auf, sodass die Tragkonsole 36 auf diesem montiert werden können. Die Montageseite 38 liegt üblicherweise vertikal, könnte jedoch auch geneigt sein, wenn der Fahrzeugrahmen 2 entsprechend ausgebildet ist.

Wie dargestellt weisen die Tragkonsolen 36 eine Rundung auf, welche den Kryobehälter 3, 4 abschnittsweise umgreift. Dadurch kann die Tragkonsole 36 auch ohne die Spannbänder 37 einen Teil der Gewichtskraft des Kryobehälters 3, 4 aufnehmen, wobei die Spannbänder 37 selbstverständlich weiterhin benötigt werden, um den Kryobehälter 3, 4 an die Tragkonsolen 36 zu spannen. Die Rundung der Tragkonsolen 36 sollte jedoch bevorzugt derart bemessen werden, dass die Tragkonsolen 36 selbst nicht unter die Unterebene U ragen. Die Tragkonsolen 36 könnten auch eine andere Form als dargestellt aufweisen und beispielsweise auch gerade ausgeführt werden. Alternativ könnten auch keine Tragkonsolen 36 eingesetzt werden, sodass die Spannbänder 37 unmittelbar am Fahrzeugrahmen 2 befestigt werden.

Kritisch bzw. hinderlich für die Montage des Kryobehälters 3, 4 am Fahrzeugrahmen 2 ist üblicherweise, wenn Anschlussleitungen 20 oder Betriebskomponenten über oder unter den Spannbändern 36 verlaufen. Da sich die genannten Zwickel 21 - 24 üblicherweise an den Außenseiten des Kryobehälters 3, 4 befinden, d.h. neben den Endkappen 17, 18 bzw. neben der Vorderebene V oder der Hinterebene H, kann vorgesehen werden, dass sich die erste und die zweite Betriebskomponente 19a, 19b nur auf jener Seite eines äußersten Spannbandes 37 befinden, die der nächstliegenden Endkappe 17, 18 zugewandt ist. In anderen Worten sind die Anschlussleitungen 20 bzw. Betriebskomponenten 19a, 19b über bzw. auf der Mantelfläche 16 zwischen dem äußersten Spannband 37 und der Endkappe 17, 18 angeordnet, wobei die Anschlussleitung 20 bzw. die Betriebskomponenten 19a, 19b auch über die Endkappe 17, 18 stehen könnten, beispielsweise in den Hinterradzwickel 21 oder Vorderradzwickel 22.

Erfindungsgemäß kann die Anschlussleitung 20 nun fahrzeugseitig durch die Zwickel 21 - 24 geführt werden und von dort in einen oberen oder unteren, dem Fahrzeug 1 zugewandten oder abgewandten Quadranten Q1, Q2 des Bauraumes 12 geführt werden, nämlich nur auf jener Seite eines äußersten Spannbandes 37, die der nächstliegenden Endkappe 17, 18 zugewandt ist, ohne dabei ein Spannband 37 überqueren oder untersetzen zu müssen. Insbesondere wenn Betriebskomponenten 19a, 19b in zumindest zwei unterschiedlichen der genannten Quadranten des Bauraumes 12, insbesondere im oberen, dem Fahrzeugrahmen 2 abgewandten Quadranten Q1 und dem unteren, dem Fahrzeugrahmen 2 abgewandten Quadranten Q2, angeordnet und mittels der genannten Verbindungsleitung 26 verbunden sind, können so viele Betriebskomponenten 19a, 19b wie möglich im zur Verfügung stehenden Bauraum 12 angeordnet werden, ohne dass Anschlussleitungen 20 Spannbänder 37 kreuzen müssten.

Es sei jedoch hervorgehoben, dass die Erfindung nicht auf diese Ausführungsformen beschränkt ist, sondern dass Anschlussleitungen 20 die Spannbänder 37 überqueren oder unterschreiten könnten, wie dies beispielsweise durch die langgezogene Abdeckung 27 aus Figur 9 dargestellt ist. Auch könnte eine langgestreckte Abdeckung mit einer über dem Umfang der Mantelfläche 16 verlaufenden Führung der Anschlussleitungen 20 bzw. entsprechenden Abdeckung kombiniert werden, wie in den Figuren 16 und 19 dargestellt ist.

Überdies ist die Erfindung auch nicht auf die Befestigung der Kryobehälter 3, 4 mittels Tragkonsolen 36 und Spannbändern 37 beschränkt, sondern könnte auch auf eine andere Art und Weise erfolgen.

Figur 20 zeigt, dass die Anschlussleitung 20 auch nur durch Teilzwickel 39 - 42 der genannten Zwickel 21 - 24 geführt sein kann, was einerseits die Definition der Zwickel 21 - 24 erleichtert, um den Einbau der Anschlussleitungen 20 in den Zwickeln 21 - 24 in der Praxis besser bzw. bereits vor der Montage des Kryobehälters 3, 4 an den Fahrzeugrahmen 2 bemessen zu können. Andererseits bieten die Teilzwickel 39 - 42 zudem einen größeren Abstand zu den sicherheitsrelevanten Bereichen, d.h. dem Hinterrad 8, dem Vorderrad 6, der Straße und dem Sattelauflieger 15.

Der erste Teilzwickel 39 ist ein Unterbereich des Hinterradzwickels 21. Dieser wird durch einen Raum gebildet, der durch die Rahmenebene R, die Außenebene A, Hinterebene H, die Oberebene O, eine vertikale hintere Abstandsebene X1 und eine horizontale untere Abstandsebene X2 begrenzt ist. Die hintere Abstandsebene X1 liegt in einem Abstand von mindestens 1 cm, mindestens 3 cm, mindestens 5 cm und/oder maximal 6 cm, maximal 10 cm, maximal 20 cm, maximal 30 cm, hinter der Hinterebene H. Die untere Abstandsebene X2 liegt in einem Abstand von mindestens 1 cm, mindestens 3 cm, mindestens 5 cm und/oder maximal 6 cm, maximal 10 cm, maximal 20 cm, maximal 30 cm, unter der Oberebene O.

Der zweite Teilzwickel 40 ist ein Unterbereich des Vorderradzwickels 22. Dieser wird durch einen Raum gebildet, der durch die Rahmenebene R, die Außenebene A, Vorderebene H, die Oberebene O, eine vertikale vordere Abstandsebene X3 und die genannte horizontale untere Abstandsebene X2 begrenzt ist. Die vordere Abstandsebene X3 liegt in einem Abstand von mindestens 1 cm, mindestens 3 cm, mindestens 5 cm und/oder maximal 6 cm, maximal 10 cm, maximal 20 cm, maximal 30 cm, vor der Vorderebene V. Die untere Abstandsebene X2 kann wie oben für den ersten Teilzwickel 39 bemessen werden.

Der dritte Teilzwickel 41 ist ein Unterbereich des Unterbauzwickels 23 und setzt sich aus einem vorderen dritten Teilzwickel 41a und einem hinteren dritten Teilzwickel 41b zusammen. Der vordere dritte Teilzwickel 41a wird durch einen Raum gebildet, der durch die Rahmenebene R, die Außenebene A, Vorderebene V, die Unterebene U, eine vertikale hintere Abstandsebene X4 und eine horizontale untere Abstandsebene X5 begrenzt ist. Die hintere Abstandsebene X4 liegt in einem Abstand von mindestens 1 cm, mindestens 3 cm, mindestens 5 cm und/oder maximal 6 cm, maximal 10 cm, maximal 20 cm, maximal 30 cm, hinter der Vorderebene V. Die untere Abstandsebene X5 liegt in einem Abstand von mindestens 1 cm, mindestens 3 cm, mindestens 5 cm und/oder maximal 6 cm, maximal 10 cm, maximal 20 cm, maximal 30 cm, unter der Unterebene U.

Der hintere dritte Teilzwickel 41b wird durch einen Raum gebildet, der durch die Rahmenebene R, die Außenebene A, Hinterebene H, die Unterebene U, eine vertikale vordere Abstandsebene X6 und die horizontale untere Abstandsebene X5 begrenzt ist. Die vordere Abstandsebene X6 liegt in einem Abstand von mindestens 1 cm, mindestens 3 cm, mindestens 5 cm und/oder maximal 6 cm, maximal 10 cm, maximal 20 cm, maximal 30 cm, vor der Hinterebene H. Die untere Abstandsebene X5 kann wie oben für den vorderen dritten Teilzwickel 41a bemessen werden.

Der vierte Teilzwickel 42 ist ein Unterbereich des Sattelaufliegerzwickels 24. Dieser wird durch einen Raum gebildet, der durch die Rahmenebene R, die Außenebene A, die Oberebene O, eine horizontale obere Abstandsebene X7, eine vertikale vordere Abstandsebene X8 und eine vertikale hintere Abstandsebene X9 begrenzt ist. Die obere Abstandsebene X7 liegt in einem Abstand von mindestens 1 cm, mindestens 3 cm, mindestens 5 cm und/oder maximal 6 cm, maximal 10 cm, maximal 20 cm, maximal 30 cm, über der Oberebene O. Die vertikale vordere Abstandsebene X8 liegt in einem Abstand von mindestens 1 cm, mindestens 3 cm, mindestens 5 cm und/oder maximal 6 cm, maximal 10 cm, maximal 20 cm, maximal 30 cm, maximal 50 cm vor der Hinterebene H. Die vertikale hintere Abstandsebene X8 fällt bevorzugt mit der Hinterebene H zusammen oder befindet sich maximal 1 cm, maximal 3 cm, maximal 4 cm, maximal 10 cm, maximal 20 cm vor der Hinterebene H.

Alternativ können die vordere und die hintere Abstandsebene X8, X9 symmetrisch vor bzw. hinter dem Anlenkpunkt P bzw. einem Mittelpunkt der am Fahrzeugrahmen 2 montierten Sattelkupplungsplatte 14 befinden, z.B. in einem Abstand von mindestens 1 cm, mindestens 3 cm, mindestens 5 cm und/oder maximal 6 cm, maximal 10 cm, maximal 20 cm, maximal 30 cm, maximal 50 cm vor bzw. hinter der dem Anlenkpunkt P bzw. dem genannten Mittelpunkt.

Es versteht sich, dass die Anschlussleitung 20 zwischen der Rahmenebene R und dem zur Verfügung stehenden Bauraum 12 nur in einem oder mehreren der genannten Zwickel 21 - 24 bzw. nur in einem oder mehreren der genannten Teilzwickel 39 - 42 verlaufen soll und insbesondere die vier Abzugsvolumina frei von Anschlussleitungen 20 bzw. Betriebskomponenten 19a, 19b bleiben sollen. Gegebenenfalls kann auch der Raum, der sich aus der Differenz der Zwickel 21 - 24 und dessen jeweiligen Teilzwickel 39 - 42 ergibt, frei von Anschlussleitungen 20 sein.

Im Übrigen muss das hierin gezeigte Fahrzeug 1 auch kein Sattelzugfahrzeug sein, sondern kann beispielsweise auch ein regulärer Lastkraftwagen sein, bei dem der Bereich über dem zur Verfügung stehenden Bauraum 12 permanent verbaut ist. Die Erfindung ist auch für diese Fahrzeuge einsetzbar, wobei nur die Führung durch den Sattelaufliegerzwickel 24 nicht zutreffend ist. Sollte im Übrigen beispielsweise einer der anderen Zwickel, insbesondere der Vorderradzwickel 22, nicht zur Verfügung stehen, da er beispielsweise durch die Fahrerkabine 9 permanent verbaut ist, wird die Führung der Anschlussleitung 20 durch diesen Zwickel nicht vorgesehen, die Anschlussleitung 20 kann aber selbstverständlich durch einen der anderen verbleibenden Zwickel geführt werden.

Die vorgenannte Erfindung ist jedoch nicht darauf beschränkt, dass die Anschlussleitung 20 durch den Hinterradzwickel 21, den Vorderradzwickel 22, den Unterbauzwickel 23 und/oder den Sattelaufliegerzwickel 24a, 24b geführt ist. Insbesondere könnte sich auch eine Betriebskomponente 19a, 19b zumindest teilweise oder auch vollständig in einem der genannten Zwickel 21 - 24b außerhalb des zur Verfügung stehenden Bauraumes 12 befinden. Hierbei ist es möglich, dass die genannte Anschlussleitung 20 in einen der Zwickel 21 - 24b geführt und dort an die im Zwickel befindliche Betriebskomponente 19a, 19b angeschlossen ist (wodurch die obenstehenden Ausführungsformen erweitert werden), oder eine Betriebskomponente 19a, 19b könnte mit einem Teil im zur Verfügung stehenden Bauraum 12 angeordnet sein und in einen der Zwickel 21 - 24b hineinragen, in welchem Fall es auch möglich ist, dass sich keine Anschlussleitung 20 im jeweiligen Zwickel befindet.

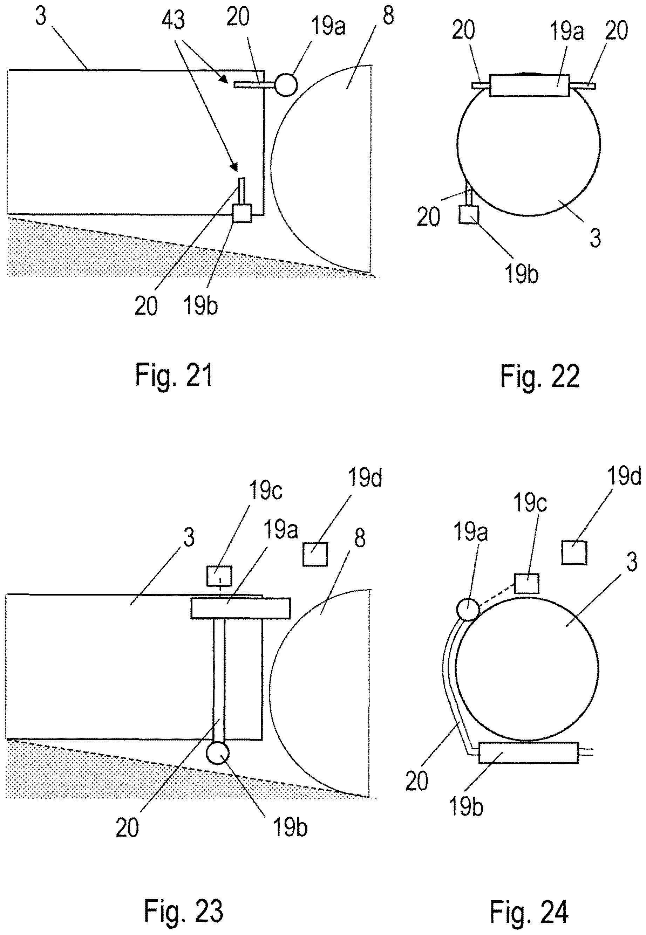

Ausführungsformen, bei denen sich Betriebskomponenten 19a, 19b zumindest teilweise in einem der genannten Zwickel 21 - 24b befinden, sind in den Figuren 21 - 24 dargestellt. Aus den Figuren 21 und 22 ist ersichtlich, dass sich eine erste Betriebskomponente 19a vollständig im Hinterradzwickel 21 und eine zweite Betriebskomponente 19b teilweise im Unterbauzwickel 23 befinden kann. Aus den Figuren 23 und 24 ist ersichtlich, dass sich eine erste Betriebskomponente 19a teilweise im Hinterradzwickel 21, eine zweite Betriebskomponente 19b vollständig im Unterbauzwickel 23 und eine dritte Betriebskomponente 19c vollständig im Sattelaufliegerzwickel 24a befinden kann.

Um eine Betriebskomponente 19a, 19b vollständig in einem der Zwickel 21 - 24b unterzubringen, kann diese bevorzugt stabförmig ausgebildet sein und im Wesentlichen horizontal und normal zur Fahrtrichtung angeordnet werden. Unter stabförmig wird beispielsweise verstanden, dass die Betriebskomponente 19a eine Erstreckungsachse aufweist, wobei die Betriebskomponente 19a entlang der Erstreckungsachse länger ist als in Richtungen normal zur Erstreckungsachse. Eine derartige horizontale, stabförmige Betriebskomponente 19a kann dazu ausgenutzt werden, um möglichst viel Platz im jeweiligen Zwickel 21 - 24b auszunutzen, wie insbesondere in Figur 22 für die erste Betriebskomponente 19a im Hinterradzwickel 21 aber auch in Figur 24 für die im Unterbauzwickel 23 befindliche zweite Betriebskomponente 19b ersichtlich ist. Besonders relevante Beispiele für eine stabförmige Betriebskomponenten 19a, 19b, die viel Raum am Fahrzeug einnehmen, sind der Wärmetauscher, die Pumpe und ein Ventilblock, d.h. Ventilmodul.

Stabförmige Betriebskomponenten 19a, 19b können jedoch auch dazu eingesetzt werden, um die Betriebskomponenten 19a, 19b effektiv in einen der genannten Zwickel 21 - 24b hineinragen zu lassen, wie aus Figur 23 für die in den Hinterradzwickel 21 hineinragende Betriebskomponente 19a ersichtlich ist. Im Allgemeinen ist jedoch weder für eine vollständig oder teilweise im Zwickel 21 - 24b befindliche Betriebskomponente 19a, 19b notwendig, dass diese stabförmig ausgebildet ist, wie dies aus den Figuren 21, 22 für die teilweise im Unterbauzwickel 23 angeordnete Betriebskomponente 19b bzw. aus den Figuren 23, 24 für die vollständig im Sattelaufliegerzwickel 24a befindliche Betriebskomponente 19b ersichtlich ist. Die Stabform ist jedoch bevorzugt, um möglichst viel Platz im jeweiligen Zwickel 21-24b auszunutzen. Wenn die Betriebskomponente 19a, 19b stabförmig ausgebildet und teilweise im Hinterradzwickel 21 oder Vorderradzwickel 22 angeordnet ist, liegt diese bevorzugt horizontal und parallel zur Fahrtrichtung, um platzsparend neben dem Kryobehälter 3, 4 in einem der Quadranten Q1-Q4 vorzuliegen. Wenn die Betriebskomponente 19a, 19b stabförmig ausgebildet und teilweise im Unterbauzwickel 23 oder Sattelaufliegerzwickel 24a, 24b angeordnet ist, steht diese bevorzugt senkrecht, und kann bevorzugt außermittig neben einer gekrümmten Endkappe vorliegen.

Bei der in den Figuren 21, 22 dargestellten, im Hinterradzwickel 21 befindlichen Betriebskomponente 19a ist ersichtlich, dass eine Anschlussleitung 20 ausgehend vom Kryobehälter 20 zur Betriebskomponente 19a geführt ist, d.h. die Anschlussleitung 20 ist an einer Anschlussstelle 43 in den Kryobehälter 3, 4 geführt, und verläuft von dort zur Betriebskomponente 19a. Ausgehend vom anderen Ende der Betriebskomponente 19a verläuft die Anschlussleitung 20 zum Fahrzeugrahmen und gegebenenfalls weiter zum Verbraucher. Dieser zum Fahrzeugrahmen geführte Abschnitt der Anschlussleitung 20 könnte jedoch auch entfallen, beispielsweise wenn die Betriebskomponente 19a eine Befüllkupplung ist.

Bei der in den Figuren 21, 22 dargestellten, teilweise im Unterbauzwickel 23 befindlichen Betriebskomponente 19b ist ersichtlich, dass sich die Anschlussleitung 20 vollständig im zur Verfügung stehenden Bauraum 12 befindet. Es ist ersichtlich, dass es nicht zwingend ist, dass die Anschlussleitung 20 auch in den jeweiligen Zwickel 21-24b geführt ist.

Die Figuren 23 und 24 zeigen eine Ausführungsform, bei der sich eine erste Betriebskomponente 19a teilweise im Hinterradzwickel 21, eine zweite Betriebskomponente 19b vollständig im Unterbauzwickel 23 und eine dritte Betriebskomponente 19c vollständig im Sattelaufliegerzwickel 24a befindet. Wie bei den Figuren 21, 22 ist die Erfindung jedoch nicht auf eine spezifische Kombination der drei Betriebskomponenten 19a, 19b beschränkt, sondern die dargestellten Betriebskomponenten 19a, 19b, 19c könnten auch unabhängig voneinander in den jeweiligen Zwickeln 21 - 24b bzw. in Kombination mit anderen oder keinen anderen Betriebskomponenten 19a, 19b, 19c eingesetzt werden.

Die in den Figuren 23, 24 dargestellte, im Hinterradzwickel 21 befindliche erste Betriebskomponente 19a befindet sich im Gegensatz zur Ausführungsform der Figuren 21, 22 nicht vollständig, sondern nur teilweise im Hinterradzwickel 21. In anderen Worten befindet sich die Betriebskomponente 19a teilweise im zur Verfügung stehenden Bauraum 12 und teilweise im Hinterradzwickel 21. Dies ist besonders bevorzugt, wenn die Betriebskomponente 19a länger ist als der Abstand zwischen Spannband und nächstliegender Endkappe, was z.B. bei Wärmetauschern vorkommen kann, sodass auch bei einer Variante wie in Figur 13 eine lange Betriebskomponente eingesetzt werden kann. Hierbei muss sich wie zuvor beschrieben keine Anschlussleitung 20 im Hinterradzwickel 21 befinden, was jedoch auch möglich wäre. Derartige Ausführungen, bei der die Betriebskomponente 19a ausgehend vom zur Verfügung stehenden Bauraum 12 in einen der Zwickel 21 - 24a ragt, ist jedoch nicht nur für den Hinterradzwickel 21 vorsehbar, sondern auch für den Vorderradzwickel 22, den Unterbauzwickel 23 (siehe z.B. die Figuren 21, 22) und den Sattelaufliegerzwickel 24a, 24b.

Die in den Figuren 23, 24 dargestellte zweite Betriebskomponente 19b befindet sich vollständig im Unterbauzwickel 23. Um diesen Unterbauzwickel 23 möglichst effektiv auszunutzen, ist die Betriebskomponente 19b stabförmig ausgebildet und im Wesentlichen horizontal und normal zur Fahrtrichtung angeordnet.

Die in den Figuren 23, 24 dargestellte dritte Betriebskomponente 19c befindet sich vollständig im Sattelaufliegerzwickel 24a. Es ist ersichtlich, dass die Betriebskomponente 19c mittels einer strichliert dargestellten Steuerleitung mit einer weiteren Betriebskomponente 19a verbunden ist und daher nicht vom Kryofluid durchströmt ist. Konkret handelt es sich bei der Betriebskomponente 19c somit um eine Steuereinheit für eine weitere Betriebskomponente des Entnahmesystems, Befüllsystems oder Ventsystems des Kryobehälters 3, 4, wobei die Steuereinheit selbst eine Betriebskomponente des Entnahmesystems, Befüllsystems oder Ventsystems ist. Im Allgemeinen kann es sich bei der zumindest teilweise im jeweiligen Zwickel 21 - 24a um eine von Kryofluid durchströmte Betriebskomponente wie einen Wärmetauscher oder um eine von Kryofluid undurchströmte Betriebskomponente wie eine Steuereinheit handeln.

Es versteht sich, dass auch eine Betriebskomponente 19d über dem Hinterradzwickel 21 bzw. neben dem Sattelaufliegerzwickel 24d angeordnet sein könnte, wobei eine Anschlussleitung 20 an diese Betriebskomponente 19d wiederum durch den Hinterradzwickel 21 und/oder Sattelaufliegerzwickel 24d verlaufen könnte.

Diese Ausführungsformen mit Betriebskomponente 19a, 19b in einem der Zwickel 21 - 24b können selbstverständlich mit den vorstehenden Ausführungsformen kombiniert werden. So könnte auch bei den Ausführungsformen der Figuren 21 - 24 eine Abdeckung vorgesehen sein, welche die jeweilige Betriebskomponente 19a, 19b bevorzugt vollständig überdeckt und hierbei zumindest den im jeweiligen Zwickel 21 - 24b befindlichen Teil der Betriebskomponente 19a, 19b überdeckt. Diese Abdeckung schützt wie die zuvor erläuterten Abdeckungen insbesondere vor mechanischen Einwirkungen (Crash-Schutz). Beispielsweise könnte bei der Ausführungsform von Figur 5 oder Figur 8 vorgesehen werden, dass sich eine Betriebskomponente 19a, 19b zumindest teilweise im Hinterradzwickel 21 befindet und vollständig von der dargestellten Abdeckung überdeckt ist. Bei der Ausführungsform von Figur 10 könnte die erste Betriebskomponente 19a in den Unterbauzwickel 23 abstehen oder sich vollständig in diesem befinden und vollständig von der Abdeckung umschlossen sein. Analog hierzu könnte die erste Betriebskomponente 19a bei der Ausführungsform von Figur 16 in den Sattelaufliegerzwickel 24a abstehen oder sich vollständig in diesem befinden und vollständig von der Abdeckung umschlossen sein.

## Patentansprüche

1. Fahrzeug (1), umfassend einen Fahrzeugrahmen (2) mit einer Rahmenoberkante (13), eine Vorderachse (5) mit zumindest einem Vorderrad (6), eine Hinterachse (7) mit zumindest einem Hinterrad (8) und einen seitlich des Fahrzeugrahmens (2) angeordneten Kryobehälter (3, 4),
wobei der Kryobehälter (3, 4) in einem Bauraum (12) angeordnet ist, der durch die folgenden Ebenen eingeschlossen ist:
- vorne durch eine am Vorderrad (6) oder gegebenenfalls an einem ersten Schmutzfänger (10) des Vorderrads (6) anliegende, dem Hinterrad (8) zugewandte vertikale Vorderebene (V) und
- hinten durch eine am Hinterrad (8) oder gegebenenfalls an einem zweiten Schmutzfänger (11) des Hinterrads (8) anliegende, dem Vorderrad (6) zugewandte vertikale Hinterebene (H),
- auf der dem Fahrzeugrahmen (2) zugewandten Seite durch eine durch die Rahmenoberkante (13) verlaufende vertikale Rahmenebene (R),
- auf der dem Fahrzeugrahmen (2) abgewandten Seite durch eine sich in einem vorbestimmten Abstand zum Fahrzeugrahmen (2) befindliche vertikale Außenebene (A),
- oben durch eine durch die Rahmenoberkante (13) verlaufende horizontale Oberebene (O),
- unten durch eine auf einer Mindestbodenfreiheitshöhe (h) liegenden horizontalen Unterebene (U),
**dadurch gekennzeichnet, dass**
zumindest eine Anschlussleitung (2), welche an den Kryobehälter (3, 4) oder an eine sich im Bauraum (12) befindliche Betriebskomponente (19a, 19b) des Kryobehälters (3, 4) angeschlossen ist, oder eine Betriebskomponente (19a, 19b), welche Teil eines Betankungsystems, Entnahmesystems oder Ventsystems des Kryobehälters (3, 4) ist, durch einen der folgenden Zwickel außerhalb des zur Verfügung stehenden Bauraumes (12) verläuft:
- durch einen Hinterradzwickel (21), der begrenzt ist von der Oberebene (O), der Unterebene (U), der Rahmenebene (R), der Außenebene (A), der Hinterebene (H) und einem ersten Abzugsvolumen (25), welches durch das Hinterrad (8) oder den zweiten Schmutzfänger (11) gebildet ist und frei von Anschlussleitungen (20) bleibt,
- durch einen Vorderradzwickel (22), der von der Oberebene (O), der Unterebene (U), der Rahmenebene (R), der Außenebene (A), der Vorderebene (V) und einem zweiten Abzugsvolumen (30) begrenzt ist, welches durch das Vorderrad (6) oder den ersten Schmutzfänger (10) gebildet ist und frei von Anschlussleitungen (20) bleibt,
- durch einen Unterbauzwickel (23), der begrenzt ist von der Rahmenebene (R), der Außenebene (A), der Vorderebene (V), der Hinterebene (H), der Unterebene (U) und einem dritten Abzugsvolumen (31), welches durch ein extrudiertes Dreieck gebildet wird, dessen erste Extrusionskante (E1) durch den untersten Punkt des Vorderrades (6) verläuft, dessen zweite Extrusionskante (E2) durch den untersten Punkt des Hinterrades (8) verläuft und dessen dritte Extrusionskante (E3) äquidistant zwischen Hinterrad (8) und Vorderrad (6) durch die Unterebene (U) verläuft, wobei das dritte Abzugsvolumen (31) frei von Anschlussleitungen (20) bleibt, oder
- durch einen Sattelaufliegerzwickel (24, 24a, 24b), der begrenzt ist von der Rahmenebene (R), der Außenebene (A), der Vorderebene (V), der Hinterebene (H), der Oberebene (O) und einem vierten Abzugsvolumen (33), welches durch einen Schwenkbereich eines am Fahrzeug (1) montierten Sattelaufliegers (15) gebildet wird, wobei das vierte Abzugsvolumen (33) frei von Anschlussleitungen (20) bleibt.

2. Fahrzeug (1) nach Anspruch 1, wobei die Anschlussleitung (20) ausgehend vom Fahrzeugrahmen (R) durch den Hinterradzwickel (21) oder Vorderzwickel (22) geführt und in einen oberen, dem Fahrzeugrahmen (2) abgewandten Quadranten (Q1) des zur Verfügung stehenden Bauraumes (12) geführt ist.

3. Fahrzeug (1) nach Anspruch 1 oder 2, wobei die Anschlussleitung (20) ausgehend vom Fahrzeugrahmen (2) unterhalb des zur Verfügung stehenden Bauraumes (12) durch den Unterraumzwickel (23) geführt ist und in einen unteren, dem Fahrzeugrahmen (2) abgewandten Quadranten (Q2) des zur Verfügung stehenden Bauraumes (12) geführt ist.

4. Fahrzeug (1) nach einem der Ansprüche 1 bis 3, wobei die Anschlussleitung (20) ausgehend vom Fahrzeugrahmen (2) oberhalb des zur Verfügung stehenden Bauraumes (12) durch den Sattelaufliegerzwickel (24, 24a, 24b) geführt ist und in einen oberen, dem Fahrzeugrahmen (2) abgewandten Quadranten (Q1) des zur Verfügung stehenden Bauraumes (12) geführt ist.

5. Fahrzeug (1) nach einem der Ansprüche 2 bis 4, wobei die Anschlussleitung (20) oder eine Verbindungsleitung (26) vom oberen, dem Fahrzeugrahmen (2) abgewandten Quadranten (Q1) des Bauraumes (12) in einen unteren, dem Fahrzeugrahmen (2) abgewandten Quadranten (Q2) des Bauraumes (12) geführt ist, bevorzugt innerhalb des zur Verfügung stehenden Bauraumes (12).

6. Fahrzeug (1) nach einem der Ansprüche 1 bis 5, umfassend eine Abdeckung (27, 32, 35), welche die Anschlussleitung (20), und/oder die Betriebskomponente im jeweiligen Zwickel (21-24b) zumindest teilweise, bevorzugt vollständig, umschließt und wobei die Abdeckung (27, 32, 35) weiters bevorzugt eine Schnittstelle (28) für einen Anschluss an die Anschlussleitung (20) und/oder die Betriebskomponente (19a, 19b) aufweist.

7. Fahrzeug (1) nach einem der Ansprüche 1 bis 6, wobei die Anschlussleitung (20) einen an einer der Endkappen (17, 18) des Kryobehälters (3, 4) angebauten, bevorzugt außermittig angebauten, Anschlussstutzen umfasst, welcher in den Hinterradzwickel (21) oder Vorderradzwickel (22) hineinragt.

8. Fahrzeug (1) nach einem der Ansprüche 1 bis 7, ferner umfassend zumindest zwei Spannbänder (37), welche den Kryobehälter (3, 4) umgreifen und im zur Verfügung stehenden Bauraum (12) am Fahrzeugrahmen (2) fixieren, gegebenenfalls auf Tragkonsolen (36), auf denen der Kryobehälter (3, 4) aufliegt, wobei sich die Anschlussleitung (20) und/oder die Betriebskomponente (19a, 19b) bevorzugt nur auf jener Seite eines äußersten Spannbandes (37) befinden, die der nächstliegenden Endkappe (17, 18) zugewandt ist.

9. Fahrzeug (1) nach einem der Ansprüche 1 bis 8, wobei die Betriebskomponente (19a, 19b) bevorzugt stabförmig ausgebildet ist, im Wesentlichen horizontal und normal zur Fahrtrichtung angeordnet ist und sich vollständig im Hinterradzwickel (21), Vorderradzwickel (22), Unterbauzwickel (23) oder Sattelaufliegerzwickel (24) befindet.

10. Fahrzeug (1) nach einem der Ansprüche 1 bis 9, wobei die Betriebskomponente (19a, 19b) bevorzugt stabförmig ausgebildet ist und im Wesentlichen horizontal und parallel zur Fahrtrichtung angeordnet ist, wenn sich die Betriebskomponente (19a, 19b) sowohl im zur Verfügung stehenden Bauraum (12) als auch im Hinterradzwickel (21) oder Vorderradzwickel (22) befindet, oder wobei die Betriebskomponente (19a, 19b) senkrecht angeordnet ist, wenn sich die Betriebskomponente (19a, 19b) sowohl im zur Verfügung stehenden Bauraum (12) als auch im Unterbauzwickel (23) oder Sattelaufliegerzwickel (24) befindet.

11. Fahrzeug (1) nach einem der Ansprüche 1 bis 10, wobei die Betriebskomponente (19a, 19b) aus der folgenden Liste ausgewählt ist: Wärmetauscher, Economizer, Überdruckventil, Rückschlagventil, Handventil, elektromechanisches Ventil, elektrischer Schalter hierfür, insbesondere Not-Aus Schalter, Ventilmodul umfassend zumindest zwei Ventile, Befüllstutzen, Entlüftungsanschluss, Entleerungsanschluss, Pumpe, Druckaufbaueinrichtung, Manometer und Steuergerät für zumindest eine der vorgenannten Betriebskomponenten.

12. Fahrzeug (1) nach einem der Ansprüche 1 bis 11, wobei die Anschlussleitung (20) und/oder die Betriebskomponente (19a, 19b) durch einen ersten Teilzwickel (39) geführt ist, der ein Unterbereich des Hinterradzwickels (21) ist, wobei der erste Teilzwickel (39) durch einen Raum gebildet ist, der durch die Rahmenebene (R), die Außenebene (A), Hinterebene (H), die Oberebene (O), eine vertikale hintere Abstandsebene (X1) und eine horizontale untere Abstandsebene (X2) begrenzt ist, wobei die hintere Abstandsebene (X1) bzw. die untere Abstandsebene (X2) in einem Abstand von 1 cm bis 30 cm hinter der Hinterebene (H) bzw. unter der Oberebene (O) liegt.

13. Fahrzeug (1) nach einem der Ansprüche 1 bis 12, wobei die Anschlussleitung (20) und/oder die Betriebskomponente (19a, 19b) durch einen zweiten Teilzwickel (40) geführt ist, der ein Unterbereich des Vorderradzwickels (22) ist, wobei der zweite Teilzwickel (40) durch einen Raum gebildet ist, der durch die Rahmenebene (R), die Außenebene (A), Vorderebene (V), die Oberebene (O), eine vertikale vordere Abstandsebene (X3) und eine horizontale untere Abstandsebene (X2) begrenzt ist, wobei die vordere Abstandsebene (X3) bzw. die untere Abstandsebene (X2) in einem Abstand von 1 cm bis 30 cm vor der Vorderebene (H) bzw. unter der Oberebene (O) liegt.

14. Fahrzeug (1) nach einem der Ansprüche 1 bis 13, wobei die Anschlussleitung (20) und/oder die Betriebskomponente (19a, 19b) durch einen vorderen dritten Teilzwickel (41a) und/oder hinteren dritten Teilzwickel (41b) geführt ist, die jeweils ein Unterbereich des Unterbauzwickels (23) sind, wobei der vordere dritte Teilzwickel (41a) durch einen Raum gebildet ist, der durch die Rahmenebene (R), die Außenebene (A), Vorderebene (V), die Unterebene (U), eine vertikale hintere Abstandsebene (X4) und eine horizontale untere Abstandsebene (X5) begrenzt ist, wobei der hintere dritte Teilzwickel (41b) durch einen Raum gebildet ist, der durch die Rahmenebene (R), die Außenebene (A), die Hinterebene (H), die Unterebene (U), eine vertikale vordere Abstandsebene (X6) und eine horizontale untere Abstandsebene (X5) begrenzt ist, wobei die hintere Abstandsebene (X4) bzw. die vordere Abstandsebene (X6) bzw. die untere Abstandsebene (X5) einem Abstand von 1 cm bis 30 cm hinter der Vorderebene (V), vor der Hinterebene (H) bzw. unter der Unterebene (U) liegt.

15. Fahrzeug (1) nach einem der Ansprüche 1 bis 14, wobei die Anschlussleitung (20) und/oder die Betriebskomponente (19a, 19b) durch einen vierten Teilzwickel (42) geführt ist, der ein Unterbereich des Sattelaufliegerzwickels (24, 24a) ist, wobei der vierte Teilzwickel (42) durch einen Raum gebildet ist, der durch die Rahmenebene (R), die Außenebene (A), die Oberebene (O), eine horizontale obere Abstandsebene (X7), eine vertikale vordere Abstandsebene (X8) oder eine vertikale hintere Abstandsebene (X9) begrenzt ist, wobei die obere Abstandsebene (X7), die vordere Abstandsebene (X8) bzw. die hintere Abstandsebene (X9) in einem Abstand von 1 cm bis 30 cm über der Oberebene (O), vor einem Anlenkpunkt (P) des Sattelaufliegers (15) am Fahrzeugrahmen (2) bzw. hinter dem Anlenkpunkt (P) liegt.

## Claims

1. A vehicle (1) comprising a vehicle frame (2) with an upper frame edge (13), a front axle (5) with at least one front wheel (6), a rear axle (7) with at least one rear wheel (8) and a cryogenic container (3, 4) arranged laterally of the vehicle frame (2),
wherein the cryogenic container (3, 4) is arranged in an installation space (12) enclosed by the following planes
- at the front, by a vertical front plane (V) resting against the front wheel (6) or optionally against a first mud flap (10) of the front wheel (6) and facing the rear wheel (8) and
- at the rear, by a vertical rear plane (H) resting against the rear wheel (8) or optionally against a second mud flap (11) of the rear wheel (8) and facing the front wheel (6),
- on the side facing the vehicle frame (2), by a vertical frame plane (R) passing through the upper frame edge (13),
- on the side facing away from the vehicle frame (2), by a vertical outer plane (A) located at a predetermined distance from the vehicle frame (2),
- at the top, by a horizontal upper plane (O) extending through the upper frame edge (13),
- at the bottom, by a horizontal lower plane (U) lying at a minimum ground clearance height (h),
**characterized in that**
at least one connection line (2), which is connected to the cryogenic container (3, 4) or to an operating component (19a, 19b) of the cryogenic container (3, 4) located in the installation space (12), or an operating component (19a, 19b), which is part of a refuelling system, withdrawal system or venting system of the cryogenic container (3, 4), runs through one of the following spandrels outside the installation space (12) available:
- through a rear wheel spandrel (21) limited by the upper plane (O), the lower plane (U), the frame plane (R), the outer plane (A), the rear plane (H) and a first discharge volume (25), which is formed by the rear wheel (8) or the second mud flap (11) and remaining free of connection lines (20),
- through a front wheel spandrel (22) limited by the upper plane (O), the lower plane (U), the frame plane (R), the outer plane (A), the front plane (V) and a second discharge volume (30), which is formed by the front wheel (6) or the first mud flap (10) and remaining free of connection lines (20),
- through a sub-structure spandrel (23) limited by the frame plane (R), the outer plane (A), the front plane (V), the rear plane (H), the lower plane (U) and a third discharge volume (31), which is formed by an extruded triangle, the first extrusion edge (E1) of which passes through the lowermost point of the front wheel (6), the second extrusion edge (E2) of which passes through the lowermost point of the rear wheel (8) and the third extrusion edge (E3) of which passes equidistantly between the rear wheel (8) and the front wheel (6) through the lower plane (U), wherein the third discharge volume (31) remains free of connection lines (20), or
- through a semi-trailer spandrel (24, 24a, 24b) limited by the frame plane (R), the outer plane (A), the front plane (V), the rear plane (H), the upper plane (O) and a fourth discharge volume (33), which is formed by a pivoting region of a semi-trailer (15) mounted on the vehicle (1), wherein the fourth discharge volume (33) remains free of connection lines (20).

2. The vehicle (1) according to claim 1, wherein the connection line (20) is routed starting from the vehicle frame (R) through the rear wheel spandrel (21) or front spandrel (22) and is routed into an upper quadrant (Q1), facing away from the vehicle frame (2), of the installation space (12) available.

3. The vehicle (1) according to claim 1 or 2, wherein the connection line (20), starting from the vehicle frame (2), is routed below the installation space (12) available through the lower structure spandrel (23) and is routed into a lower quadrant (Q2), facing away from the vehicle frame (2), of the installation space (12) available.

4. The vehicle (1) according to any of the claims 1 to 3, wherein the connection line (20), starting from the vehicle frame (2), is routed above the installation space (12) available through the semi-trailer spandrel (24, 24a, 24b) and is routed into an upper quadrant (Q1), facing away from the vehicle frame (2), of the installation space (12) available.

5. The vehicle (1) according to any of the claims 2 to 4, wherein the connection line (20) or a connecting line (26) is routed from the upper quadrant (Q1), facing away from the vehicle frame (2), of the installation space (12) into a lower quadrant (Q2), facing away from the vehicle frame (2), of the installation space (12), preferably within the installation space (12) available.

6. The vehicle (1) according to any of the claims 1 to 5, comprising a cover (27, 32, 35), which at least in part, preferably completely, encloses the connection line (20) and/or the operating component in the respective spandrel (21-24b), and wherein the cover (27, 32, 35) furthermore preferably has an interface (28) for a connection to the connection line (20) and/or the operating component (19a, 19b).

7. The vehicle (1) according to any of the claims 1 to 6, wherein the connection line (20) comprises a connection fitting attached, preferably off-centre, to one of the end caps (17, 18) of the cryogenic container (3, 4), which projects into the rear wheel spandrel (21) or front wheel spandrel (22).

8. The vehicle (1) according to any of the claims 1 to 7, further comprising at least two tensioning straps (37), which embrace the cryogenic container (3, 4) and fix it within the installation space (12) available on the vehicle frame (2), optionally on support brackets (36), on which the cryogenic container (3, 4) rests, wherein the connection line (20) and/or the operating component (19a, 19b) are preferably located only on that side of an outermost tensioning strap (37), which faces the nearest end cap (17, 18).

9. The vehicle (1) according to any of the claims 1 to 8, wherein the operating component (19a, 19b) is preferably configured to be rod-shaped and is arranged substantially horizontally and perpendicularly to the direction of travel and is located completely within the rear wheel spandrel (21), the front wheel spandrel (22), the lower structure spandrel (23) or semi-trailer spandrel (24).

10. The vehicle (1) according to any of the claims 1 to 9, wherein the operating component (19a, 19b) is preferably configured to be rod-shaped and is arranged substantially horizontally and perpendicularly to the direction of travel if the operating component (19a, 19b) is located within the installation space (12) available as well as within the rear wheel spandrel (21) or the front wheel spandrel (22) or wherein the operating component (19a, 19b) is arranged vertically if the operating component (19a, 19b) is located within the installation space (12) available as well as within the lower structure spandrel (12) or semi-trailer spandrel (24).

11. The vehicle (1) according to any of the claims 1 to 10, wherein the operating component (19a, 19b) is selected from the following list: heat exchanger, economizer, pressure relief valve, check valve, manual valve, electromechanical valve, electrical switch for this purpose, in particular emergency stop switch, valve module comprising at least two valves, filling fitting, venting connection, discharging connection, pump, pressure build-up device, pressure gauge and control unit for at least one of the aforementioned operating components.

12. The vehicle (1) according to any of the claims 1 to 11, wherein the connection line (20) and/or the operating component (19a, 19b) is routed through a first partial spandrel (39), which is a sub-region of the rear wheel spandrel (21), wherein the first partial spandrel (39) is formed by a space limited by the frame plane (R), the outer plane (A), the rear plane (H), the upper plane (O), a vertical rear spacing plane (X1) and a horizontal lower spacing plane (X2), wherein the rear spacing plane (X1) and the lower spacing plane (X2), respectively, are located at a distance of 1 cm to 30 cm behind the rear plane (H) or below the upper plane (O), respectively.

13. The vehicle (1) according to any of the claims 1 to 12, wherein the connection line (20) and/or the operating component (19a, 19b) is routed through a second partial spandrel (40), which is a sub-region of the front wheel spandrel (22), wherein the second partial spandrel (40) is formed by a space limited by the frame plane (R), the outer plane (A), the front plane (V), the upper plane (O), a vertical front spacing plane (X3) and a horizontal lower spacing plane (X2), wherein the front spacing plane (X3) or the lower spacing plane (X2), respectively, is located at a distance of 1 cm to 30 cm in front of the front plane (H) or below the upper plane (O), respectively.

14. The vehicle (1) according to any one of the claims 1 to 13, wherein the connection line (20) and/or the operating component (19a, 19b) is routed through a front third partial spandrel (41a) and/or rear third partial spandrel (41b), each of which is a sub-region of the lower structure spandrel (23), wherein the front third partial spandrel (41a) is formed by a space limited by the frame plane (R), the outer plane (A), front plane (V), the lower plane (U), a vertical rear spacing plane (X4) and a horizontal lower spacing plane (X5), wherein the rear third partial spandrel (41b) is formed by a space limited by the frame plane (R), the outer plane (A), the rear plane (H), the lower plane (U), a vertical front spacing plane (X6) and a horizontal lower spacing plane (X5), wherein the rear spacing plane (X4) and the front spacing plane (X6) are respectively located at a distance of 1 cm to 30 cm behind the front plane (V), in front of the rear plane (H) or below the lower plane (U), respectively.

15. The vehicle (1) according to any of the claims 1 to 14, wherein the connection line (20) and/or the operating component (19a, 19b) is routed through a fourth partial spandrel (42) which is a sub-region of the semi-trailer spandrel (24, 24a), wherein the fourth partial spandrel (42) is formed by a space limited by the frame plane (R), the outer plane (A), the upper plane (O), a horizontal upper spacing plane (X7), a vertical front spacing plane (X8) or a vertical rear spacing plane (X9), wherein the upper spacing plane (X7), the front spacing plane (X8) or the rear spacing plane (X9) are located at a distance of 1 cm to 30 cm above the upper plane (O), in front of an articulation point (P) of the semi-trailer (15) on the vehicle frame (2) or behind the articulation point (P), respectively.

## Revendications

1. Véhicule (1), comprenant un châssis de véhicule (2) avec un bord supérieur de châssis (13), un essieu avant (5) avec au moins une roue avant (6), un essieu arrière (7) avec au moins une roue arrière (8) et un conteneur cryogénique (3, 4) disposé sur le côté du châssis de véhicule (2),
dans lequel le conteneur cryogénique (3, 4) est disposé dans un compartiment (12) qui est clos par les plans suivants :
- à l'avant par un plan avant (V) vertical disposé au niveau de la roue avant (6) ou, le cas échéant, au niveau d'un premier garde-boue (10) de la roue avant (6), et orienté vers la roue arrière (8) et
- à l'arrière par un plan arrière (H) vertical disposé au niveau de la roue arrière (8) ou, le cas échéant, au niveau d'un deuxième garde-boue (11) de la roue arrière (8), et orienté vers la roue avant (6),
- sur le côté orienté vers le châssis de véhicule (2) par un plan de châssis (R) vertical traversant le bord supérieur de châssis (13),
- sur le côté opposé au châssis de véhicule (2) par un plan extérieur (A) vertical se trouvant à une distance prédéfinie du châssis de véhicule (2),
- sur le dessus par un plan supérieur (O) horizontal traversant le bord supérieur de châssis (13) et
- sur le dessous par un plan inférieur (U) horizontal se trouvant à une hauteur minimum de garde au sol (h),
**caractérisée en ce qu'**au moins une ligne de connexion (2) qui est connectée au conteneur cryogénique (3, 4) ou à un composant fonctionnel (19a, 19b) du conteneur cryogénique (3, 4) se trouvant dans le compartiment (12), ou un composant fonctionnel (19a, 19b) qui fait partie d'un système de remplissage, d'un système de prélèvement ou d'un système de purge du conteneur cryogénique (3, 4) court à travers un des coins suivants à l'extérieur du compartiment (12) disponible :
- à travers un coin de roue arrière (21) qui est délimité par le plan supérieur (O), le plan inférieur (U), le plan de châssis (R), le plan extérieur (A), le plan arrière (H) et un premier volume d'extraction (25), lequel est formé par la roue arrière (8) ou le deuxième garde-boue (11) et reste exempt de lignes de connexion (20),
- à travers un coin de roue avant (22) qui est délimité par le plan supérieur (O), le plan inférieur (U), le plan de châssis (R), le plan extérieur (A), le plan avant (V) et un deuxième volume d'extraction (30), lequel est formé par la roue avant (6) ou le premier garde-boue (10) et reste exempt de lignes de connexion (20),
- à travers un coin de support (23) qui est délimité par le plan de châssis (R), le plan extérieur (A), le plan avant (V), le plan arrière (H), le plan inférieur (U) et un troisième volume d'extraction (31), lequel est formé par un triangle extrudé dont le premier bord d'extrusion (E1) court à travers le point le plus bas de la roue avant (6), dont le deuxième bord d'extrusion (E2) court à travers le point le plus bas de la roue arrière (8) et dont le troisième bord d'extrusion (E3) court à travers le plan inférieur (U) à équidistance de la roue arrière (8) et de la roue avant (6), le troisième volume d'extraction (31) restant exempt de lignes de connexion (20), ou
- à travers un coin de semi-remorque (24, 24a, 24b) qui est délimité par le plan de châssis (R), le plan extérieur (A), le plan avant (V), le plan arrière (H), le plan supérieur (O) et un quatrième volume d'extraction (33), lequel est formé par une zone de pivotement d'une semi-remorque (15) montée sur le véhicule (1), le quatrième volume d'extraction (33) restant exempt de lignes de connexion (20).

2. Véhicule (1) selon la revendication 1, dans lequel la ligne de connexion (20) partant du châssis de véhicule (R) est guidée à travers le coin arrière (21) ou le coin avant (22) et est guidée dans un quadrant supérieur (Q1), espacé du châssis de véhicule (2), du compartiment (12) disponible.

3. Véhicule (1) selon la revendication 1 ou 2, dans lequel la ligne de connexion (20) partant du châssis de véhicule (2) est guidée au-dessous du compartiment disponible (12) à travers le coin de support (23) et est guidée dans un quadrant inférieur (Q2), espacé du châssis de véhicule (2), du compartiment (12) disponible.

4. Véhicule (1) selon une des revendications 1 à 3, dans lequel la ligne de connexion (20) partant du châssis de véhicule (2) est guidée au-dessus du compartiment disponible (12) à travers le coin de semi-remorque (24, 24a, 24b) et est guidée dans un quadrant supérieur (Q1), espacé du châssis de véhicule (2), du compartiment (12) disponible.

5. Véhicule (1) selon une des revendications 2 à 4, dans lequel la ligne de connexion (20) ou une ligne de raccordement (26) est guidée du quadrant supérieur (Q1), espacé du châssis de véhicule (2), du compartiment (12) à un quadrant inférieur (Q2), espacé du châssis de véhicule (2), du compartiment (12), de préférence à l'intérieur du compartiment (12) disponible.

6. Véhicule (1) selon une des revendications 1 à 5, comprenant un capot (27, 32, 35) qui entoure au moins partiellement, de préférence entièrement, la ligne de connexion (20) et/ou le composant fonctionnel dans le coin respectif (21-24b), lequel capot (27, 32, 35) comporte en outre de préférence une interface (28) pour une connexion à la ligne de connexion (20) et/ou au composant fonctionnel (19a, 19b).

7. Véhicule (1) selon une des revendications 1 à 6, dans lequel la ligne de connexion (20) comprend un manchon de raccordement monté, de préférence de façon excentrée, sur un des bouchons d'extrémité (17, 18) du conteneur cryogénique (3, 4), lequel pénètre dans le coin de roue arrière (21) ou le coin de roue avant (22).

8. Véhicule (1) selon une des revendications 1 à 7, comprenant en outre au moins deux sangles de serrage (37) qui enserrent le conteneur cryogénique (3, 4) et le fixent dans le compartiment (12) disponible, sur le châssis de véhicule (2), le cas échéant sur des consoles de support (36) sur lesquelles le conteneur cryogénique (3, 4) repose, la ligne de connexion (20) et/ou le composant fonctionnel (19a, 19b) se trouvant de préférence uniquement sur le côté d'une sangle de serrage extérieure (37) qui est orienté vers le bouchon d'extrémité (17, 18) le plus proche.

9. Véhicule (1) selon une des revendications 1 à 8, dans lequel le composant fonctionnel (19a, 19b) est configuré de préférence en forme de tige, est disposé sensiblement horizontalement et perpendiculairement à la direction de déplacement et se trouve intégralement dans le coin de roue arrière (21), le coin de roue avant (22), le coin de support (23) ou le coin de semi-remorque (24).

10. Véhicule (1) selon une des revendications 1 à 9, dans lequel le composant fonctionnel (19a, 19b) est configuré de préférence en forme de tige et est disposé sensiblement horizontalement et parallèlement à la direction de déplacement quand le composant fonctionnel (19a, 19b) se trouve aussi bien dans le compartiment (12) disponible que dans le coin de roue arrière (21) ou le coin de roue avant (22), ou dans lequel le composant fonctionnel (19a, 19b) est disposé verticalement quand le composant fonctionnel (19a, 19b) se trouve aussi bien dans le compartiment (12) disponible que dans le coin de support (23) ou le coin de semi-remorque (24).

11. Véhicule (1) selon une des revendications 1 à 10, dans lequel le composant fonctionnel (19a, 19b) est choisi parmi la liste suivante : échangeur de chaleur, économiseur, soupape de surpression, soupape anti-retour, soupape manuelle, soupape électromécanique, commutateur électrique, en particulier interrupteur d'arrêt d'urgence, module de soupapes comprenant au moins deux soupapes, embout de remplissage, raccord de purge, raccord de prélèvement, pompe, dispositif de mise en pression, manomètre et appareil de commande pour au moins un des composants fonctionnels susmentionnés.

12. Véhicule (1) selon une des revendications 1 à 11, dans lequel la ligne de connexion (20) et/ou composant fonctionnel (19a, 19b) sont guidés à travers un premier coin partiel (39) qui est un sous-espace du coin de roue arrière (21), lequel premier coin partiel (39) est constitué par un espace qui est délimité par le plan de châssis (R), le plan extérieur (A), le plan arrière (H), le plan supérieur (O), un plan distant arrière vertical (X1) et un plan distant inférieur horizontal (X2), le plan distant arrière (X1) et le plan distant inférieur (X2) se trouvant respectivement à une distance de 1 cm à 30 cm derrière le plan arrière (H) et sous le plan supérieur (O).

13. Véhicule (1) selon une des revendications 1 à 12, dans lequel la ligne de connexion (20) et/ou composant fonctionnel (19a, 19b) sont guidés à travers un deuxième coin partiel (40) qui est un sous-espace du coin de roue avant (22), lequel deuxième coin partiel (40) est constitué par un espace qui est délimité par le plan de châssis (R), le plan extérieur (A), le plan avant (V), le plan supérieur (O), un plan distant avant vertical (X3) et un plan distant inférieur horizontal (X2), le plan distant avant (X3) et le plan distant inférieur (X2) se trouvant respectivement à une distance de 1 cm à 30 cm devant le plan avant (H) et sous le plan supérieur (O).

14. Véhicule (1) selon une des revendications 1 à 13, dans lequel la ligne de connexion (20) et/ou composant fonctionnel (19a, 19b) sont guidés à travers un troisième coin partiel avant (41a) et/ou un troisième coin partiel arrière (41b) qui sont chacun un sous-espace du coin de support (23), lequel troisième coin partiel avant (41a) est constitué par un espace qui est délimité par le plan de châssis (R), le plan extérieur (A), le plan avant (V), le plan inférieur (U), un plan distant arrière vertical (X4) et un plan distant inférieur horizontal (X5) et lequel troisième coin partiel arrière (41b) est constitué par un espace qui est délimité par le plan de châssis (R), le plan extérieur (A), le plan arrière (H), le plan inférieur (U), un plan distant avant vertical (X6) et un plan distant inférieur horizontal (X5), le plan distant arrière (X4), le plan distant avant (X6) et le plan distant inférieur (X5) se trouvant respectivement à une distance de 1 cm à 30 cm derrière le plan avant (V), devant le plan arrière (H) et sous le plan inférieur (U).

15. Véhicule (1) selon une des revendications 1 à 14, dans lequel la ligne de connexion (20) et/ou composant fonctionnel (19a, 19b) sont guidés à travers un quatrième coin partiel (42) qui est un sous-espace du coin de semi-remorque (24, 24a), lequel quatrième coin partiel (42) est constitué par un espace qui est délimité par le plan de châssis (R), le plan extérieur (A), le plan supérieur (O), un plan distant supérieur horizontal (X7), un plan distant avant vertical (X8) et un plan distant arrière vertical (X9), le plan distant supérieur (X7), le plan distant avant (X8) et le plan distant arrière (X9) se trouvant respectivement à une distance de 1 cm à 30 cm au-dessus du plan supérieur (O), devant le point d'articulation (P) de la semi-remorque (15) sur le châssis de véhicule (2) et derrière le point d'articulation (P).
